(19) **Europäisches Patentamt**
**European Patent Office**
**Office européen des brevets**

(11) **EP 1 845 704 B1**

(12) **EUROPEAN PATENT SPECIFICATION**

(45) Date of publication and mention
of the grant of the patent:
**30.05.2012 Bulletin 2012/22**

(51) Int Cl.:
***H04N 1/60*** (2006.01)

(21) Application number: **07006082.7**

(22) Date of filing: **23.03.2007**

(54) **Methods and systems for tone mapping messaging, image receiving device, and image sending device**

Verfahren und Systeme für Dynamikkompressions-Datentransfer, Bildempfangsvorrichtung und Bildsendevorrichtung

Procédés et systèmes pour messagerie de mappage de tonalité, dispositif de réception d'images et dispositif d'envoi d'images

(84) Designated Contracting States:
**DE FR GB**

(30) Priority: **24.03.2006 US 785486 P**
 **10.07.2006 US 806931 P**
 **04.12.2006 US 566657**

(43) Date of publication of application:
**17.10.2007 Bulletin 2007/42**

(73) Proprietor: **Sharp Kabushiki Kaisha**
**Osaka-shi, Osaka 545-8522 (JP)**

(72) Inventors:
• **Segall, Christopher Andrew**
 **Camas, WA 98607 (US)**
• **Kerofsky, Louis Joseph**
 **Camas, WA 98607 (US)**
• **Lei, Shawmin**
 **Camas, WA 98607 (US)**

(74) Representative: **Müller - Hoffmann & Partner**
**Patentanwälte**
**Innere Wiener Strasse 17**
**81667 München (DE)**

(56) References cited:
**EP-A- 1 578 109 WO-A-2005/104035**
**US-A1- 2003 002 748 US-A1- 2003 184 812**
**US-A1- 2006 015 919**

• **SEGALL A ET AL: "Tone Mapping SEI Message"**
**VIDEO STANDARDS AND DRAFTS, XX, XX, no.**
**JVT-T060, 19 July 2006 (2006-07-19),**
**XP030006547**

**Description**

FIELD OF THE INVENTION

Embodiments of the present invention comprise methods and systems for tone mapping messaging, an image receiving device, and an image sending device.

BACKGROUND OF THE INVENTION

Video coding is often influenced by the state-of-the-art in display technology. Coding techniques are developed to reduce the bit-rate of an image sequence, and special emphasis is placed on discarding information that is not visibly noticeable. However, it is important to realize that current state-of-the-art display devices can not reproduce the entire dynamic range of the human visual system. Humans are able to resolve approximately five orders of magnitude of dynamic range within a small time window. This is well below the 2-3 orders of magnitude provided by current consumer technology.

Capturing and processing data with a larger dynamic range is useful for applications that are not constrained by the display. For example, surveillance and security applications may capture a larger dynamic range for off-line analysis. Film makers and videographers can benefit from larger dynamic range data for more controlled tone mapping and color correction processing. Finally, the storage and archival of larger dynamic range material helps "future proof" an archive.

US Laid-Open Patent Application No. 2006/0077405 described a method for tone mapping film content during the digitization process. The tone mapping algorism may be derived from metadata.

However, no discussion of the form, syntax, or transport of this metadata is included. This is marked difference to what the subject application discloses, as the subject application focuses on representation, storage and transport of tone mapping metadata.

US Laid-Open Patent Application No. 2005/0243177, US Laid-Open Patent Application No. 2005/0047676, US Laid-Open Patent Application No. 2004/0218830, US Patent No. 7010174, US Patent No. 6879731, European Laid-Open Patent Application No. 1507234, and WO Publication No. 2004/098167 teach a method for generating a high dynamic range video sequence from commercially available (low dynamic range) camcorders. The resulting high dynamic range video sequence is tone mapped for display.

However, there is no consideration of neither: (i) transmitting tone mapping information (e.g. a tone mapping function) from an encoder to a decoder; and (ii) transmitting the entire high dynamic range sequence to a decoder along with tone mapping information.

US Laid-Open Patent Application No. 2005/0030315 describes a system to edit a set of related images. This document, however, does not relate to video. Furthermore, there is no consideration of neither: (i) transmitting tone mapping information (e.g. a tone mapping function) from an encoder to a decoder; and (ii) embedding tone mapping information into a video bitstream.

US Laid-Open Patent Application No. 2005/0013501 describes a method for generating a single high dynamic range image from a video sequence with varying exposure. However, there is no consideration of (i) transmitting tone mapping information (e.g. a tone mapping function) from an encoder to a decoder; and (ii) embedding the tone mapping information in a video bit stream.

WO 2005/104035 A describes a method for encoding high dynamic range image (HDR) data. In this method a data structure is transmitted that comprises a tone map having a reduced dynamic range and high dynamic range information. The high dynamic range can be reconstructed from the tone map and the HDR information. In this known method, since the tone map represents the image in a reduced dynamic range it can be output. The HDR information is transmitted additionally so that the image can also be output with a high dynamic range.

EP-A-1 578 109 discloses an imaging apparatus in which an image file is generated based on image data and the image data are stored together with an exposure reference value. An image processing apparatus selects a gradation conversion table based on the exposure reference value. Based on the selected gradation conversion table gradation conversion processing is performed.

US 2003/184812 A1 describes a method and an apparatus for performing tone transformation on an image by using tone characteristic information. The tone characteristic information can be retrieved by analyzing the header information for each image (identified by an image ID which is a unique identifier) which includes information about the name of a device whose profile is to be used and where the profile can be found. The profile comprises TRC transformations which are applied to the image to perform tone mapping.

## SUMMARY OF THE INVENTION

The objective of the present invention is to provide a method, system, image receiving device, and image sending device, which can send information regarding a tone map to an image receiving device performing tone mapping using a tone map, so as to realize tone mapping corresponding to the content of an image, the characteristics of the image receiving device, recipient's preference (the preference of the image receiving device), or the like.

To achieve the objective above, a system of the present invention for converting an image from a first dynamic range to a second dynamic range includes the features as claimed in claim 1 or claim 2.

To achieve the objective above, a method of the present invention for converting an image from a first dynamic range to a second dynamic range includes the features of claims 9 and 10.

According to this arrangement, a message including a tone map model identifier and tone map model parameters associated with a first tone map model is sent in association with an image to the image receiving device. In the image receiving device, a first tone map model is selected in accordance with the tone map model identifier and tone map model parameters from plural tone map models which have been established in advance, and an image is converted from a first dynamic range to a second dynamic range by using a configured version of said first tone map model. Since the data size of the tone map model identifier is smaller than those of the tone map and tone map model, the arrangement above allows the image receiving device to use the tone map model determined in accordance with the content of the image or the like, and hence tone mapping corresponding to the content of the image or the like is realized without increasing an amount of data supplied to the image receiving device.

According to this arrangement, to the image receiving device, an image and also a message including plural tone maps are supplied. With this, in the image receiving device, plural tone maps are supplied, a tone map used for the conversion is selected from the supplied tone maps, and the image is converted from a first dynamic range to a second dynamic range by using the selected tone map. On this account, even if the image receiving device is not provided with a tone map in advance, the image receiving device can perform tone mapping corresponding to the characteristics or preference of the image receiving device.

An image receiving device of the present invention for converting an image from a first dynamic range to a second dynamic range includes: a map receiver (142) which receives a message including plural tone maps; and a map selector (148, 148A, 148B) which selects the first tone map from said plural tone maps.

## BRIEF DESCRIPTION OF THE DRAWINGS

Figure 1 is a diagram showing an exemplary embodiment comprising an encoder and a decoder;

Figure 2 is a diagram showing an exemplary embodiment comprising an encoder and a transcoder;

Figure 3 is a flowchart showing steps of an exemplary embodiment comprising sending a tone map model ID;

Figure 4 is a flowchart showing steps of an exemplary embodiment comprising sending a tone map model ID and tone map model parameters;

Figure 5 is a flowchart showing steps of an exemplary embodiment comprising sending a tone map ID;

Figure 6 is a flowchart showing steps of an exemplary embodiment comprising sending a tone map cancellation flag;

Figure 7 is a flowchart showing steps of an exemplary embodiment comprising sending a tone map repetition period;

Figure 8 is a flowchart showing steps of an exemplary embodiment comprising application of tone maps to an image;

Figure 9 is a flowchart showing steps of an exemplary embodiment comprising tone map selection at an image receiving device;

Figure 10 is a flowchart showing steps of an exemplary embodiment comprising selection of a plurality of tone maps wherein each model corresponds to a different converted bit-depth;

Fig. 11 is a flowchart showing steps of an exemplary embodiment comprising matching a tone map ID to an image receiving device characteristic;

Figure 12 is a chart showing an exemplary linear tone map;

Figure 13 is a chart showing an alternative exemplary linear tone map;

Figure 14 is a chart showing an exemplary sigmoidal tone map; and

Figure 15 is a chart showing an exemplary piecewise linear tone map.

Figure 16 is a block diagram showing a system including an encoder which sends a tone map model ID of an embodiment.

Figure 17 is a block diagram showing a system including an encoder which sends a tone map model ID and a tone map model parameter of another embodiment.

Figure 18 is a block diagram showing a system including an encoder which sends a tone map ID of a further embodiment.

Figure 19 is a block diagram showing a system including an encoder which sends a tone map cancel flag of a further embodiment.

Figure 20 is a block diagram showing a system including an encoder sending a tone map repetition period of a further embodiment.

Figure 21 is a block diagram showing a system including an image receiving device of a further embodiment, which applies a tone map to an image.

Figure 22 is a block diagram showing a system including an image receiving device of a further embodiment, which selects a tone map.

Figure 23 is a block diagram showing a system of a further embodiment, which selects a tone map corresponding to a bit depth after the conversion.

Figure 24 is a block diagram showing a system including an image receiving device of a further embodiment, which selects a tone map corresponding to the characteristics of the image receiving device, based on a tone map ID.

DESCRIPTION OF THE EMBODIMENTS

It will be readily understood that the components of the present invention, as generally described and illustrated in the figures herein, could be arranged and designed in a wide variety of different configurations. Thus, the following more detailed description of the embodiments of the methods and systems of the present invention is not intended to limit the scope of the invention, but it is merely representative of the presently preferred embodiments of the invention.

Elements of embodiments of the present invention may be embodied in hardware, firmware and/or software. While exemplary embodiments revealed herein may only describe one of these forms, it is to be understood that one skilled in the art would be able to effectuate these elements in any of these forms while resting within the scope of the present invention.

H.264/MPEG-4 AVC [Joint Video Team of ITU-T VCEG and ISO/IEC MPEG, "Advanced Video Coding (AVC) - 4th Edition," ITU-T Rec. H.264 and ISO/IEC 14496-10 (MPEG4-Part 10), January 2005], which is incorporated by reference herein, is a video codec specification that is related to embodiments of the present invention.

The SVC extension of H.264/MPEG-4 AVC [Working Document 1.0 (WD-1.0) (MPEG Doc. N6901) for the Joint Scalable Video Model (JSVM)], which is incorporated by reference herein, is a layered video codec in which the redundancy between layers is exploited by inter-layer prediction mechanisms.

The additional bit-depth enabled within the AVC video coding standard as well as ongoing investigations within the Joint Video Team allows for smaller quantization intervals and increased PSNR values. While this fidelity will benefit many applications, it is not the only use for higher bit-depth coding. Capturing an expanded dynamic range is also a reasonable use for the higher bit-depths. In embodiments of the present invention, a Supplemental Enhancement Information (SEI) message may be used to encapsulate the dynamic range of the source material within the bitstream. This signals the use of higher bit-depth profiles for representing larger dynamic range sequences.

Some embodiments of the present invention describe the relationship between a high bit-depth sequence and its more traditional, low bit-depth representation. An example low bit-depth representation would be an 8-bit representation. At one extreme, this relationship may describe the use of a smaller quantization interval. That is that the high bit-depth sequence contains a finely quantized version of the low bit-depth representation. As a second example, the quantization interval may be unchanged between the high bit-depth and low bit-depth data. The additional bits then extend the dynamic range and allow signal information to be coded that is not represented in the traditional, low bit-depth representation. Some embodiments may operate anywhere within the above extremes.

Some embodiments of the present invention comprise sophisticated tone mapping algorithms for converting larger dynamic range images to traditional, low bit-depth images. Some embodiments may or may not define a tone mapping algorithm and may simply indicate the dynamic range corresponding to the additional bits by providing a way to specify the preferred tone mapping curves. In some embodiments of the present invention signals may indicate whether additional bits simply provide fidelity or whether they provide extended dynamic range, in which case a tone mapping process may be used to extract a lower bit-depth image.

Four primary exemplary models may be used to express the relationship between a higher bit-depth and lower bit-depth data. These methods are related to basic tone mapping operations. However, these embodiments provide a flexible way of transmitting the relative dynamic range of a sequence. In some embodiments, a display process may use the signaled information explicitly. However, in some embodiments, the dynamic range SEI message may be used to guide more sophisticated processing algorithms.

Exemplary Model 0

As an exemplary model 0 corresponding to a tone map model 0, these embodiments comprise a model using linear mapping with clipping. That is to say that the relationship between the high bit-depth and low bit-depth data is a linear function within a particular region of the intensity space. Outside of this region though, all other values are clipped. In other words, when the intensity y of tone-mapped image data (i.e. data with a lower bit depth) is represented by a function f(x) where the intensity x of image data to be tone mapped (i.e. data with a higher bit depth) is used as an independent variable, the function f(x) is a linear function in a specific region of x. When x is out of the specific region, the function f(x) is either 0 - (when x is lower than the specific region) or the maximum intensity (when x is higher than the specific region).

Exemplary Model 1

As an exemplary model 1 corresponding to a tone map model 1, these embodiments comprise a sigmoidal model, or S-curve model. This is similar to the previous model, in that there is a mapping between intensity values within a central region. However, the sigmoid model does not impose a hard clipping operation at its boundaries. Instead, a soft clip or roll off occurs.

Exemplary Model 2

As an exemplary model 2 corresponding to a tone map model 2, these embodiments comprise a user defined lookup table. This is the most general method for expressing the relationship between a high bit-depth image and low bit-depth data. The i-th entry of the lookup table defines the beginning point of an interval within the high bit-depth data such that all data in the interval are mapped to the value i in the low bit-depth data.

Exemplary Model 3

As an exemplary model 3 corresponding to a tone map model 3, These embodiments comprise a piece-wise linear model. In this model, the coordinates of the pivot points of the piece-wise linear model are transmitted. The mapping values between two pivot points can be obtained by simple linear interpolation.

Exemplary Embodiments

To facilitate current and future interoperability between systems with an enhanced dynamic range, embodiments of the present invention may comprise an SEI message that encapsulates information about the acquisition process into the SEI message. This data may contain information not available in the video usability information (VUI), and its syntax may specifically describe the relationship between the acquired dynamic range and a lower bit-depth representation. An exemplary SEI message may be specified as follows:

## Tone mapping SEI message syntax

| tone_mapping( payloadSize ) { | C | Descriptor |
|---|---|---|
| tone_map_id | 5 | ue(v) |
| tone_map_cancel_flag | 5 | u(1) |
| if( !tone_map_cancel_flag ) { | | |
|   tone_map_repetition_period | 5 | ue(v) |
|   coded_data_bit_depth | 5 | u(8) |
|   sei_bit_depth | 5 | u(8) |
|   model_id | 5 | ue(v) |
|   if( model_id == 0 ) { | | |
|     min_value | 5 | u(32) |
|     max_value | 5 | u(32) |
|   } | | |
|   if( model_id == 1 ) { | | |
|     sigmoid_midpoint | 5 | u(32) |
|     sigmoid_width | 5 | u(32) |
|   } | | |
|   if( model_id == 2 ) { | | |
|     for( i=0; i < (1<<sei_bit_depth); i++ ) | | |
|       start_of_coded_interval[ i ] | 5 | u(v) |
|     } | | |
|   if( model_id == 3 ) { | | |
|     num_pivots | 5 | u(16) |
|     for( i=0; i < num_pivots; i++ ) | | |
|     { | | |
|       coded_pivot_value[ i ] | 5 | u(v) |
|       sei_pivot_value[ i ] | 5 | u(v) |
|     } | | |
|   } | | |
|  } | | |
| } | | |
| | | |

Tone mapping SEI message semantics

tone_map_id indicates a tone map ID and contains an identifying number that may be used to identify the purpose of the tone mapping model (tone map model). The value of tone_map_id shall be in the range of 0 to 232-1, inclusive.

Values of tone_map_id from 0 to 255 and from 512 to $2^{31}$-1 1 may be used as determined by the application. Values of tone_map_id from 256 to 511 l and from $2^{31}$ to $2^{32}$-1 are reserved for future use by ITU-T|ISO/IEC. Decoders encountering a value of tone_map_id in the range of 256 to 511 or in the range of $2^{31}$ to $2^{32}$-1 shall ignore (remove from the bitstream and discard) it.

Note - the tone_map_id flag can be used to support tone mapping operations that are suitable for different display scenarios. For example, different values of tone_map_id may correspond to different display bit-depths.

tone_map_cancel_flag is a tone map cancel flag to cancel the persistence of previous tome map message. tone_map_cancel_flag equal to 1, indicates that the SEI message cancels the persistence of any previous tone mapping SEI message in output order. tone_map_cancel_flag equal to 0 indicates that tone mapping information follows.

tone_map_ repetition_period is a tone map repetition period and specifies the persistence of the tone mapping SEI message and may specify a picture order count interval within which another tone mapping SEI message with the same value of tone_map _id or the end of the coded video sequence shall be present in the bitstream.. The value of tone_map_repetition_period shall be in the range of 0 to 16384, inclusive.

tone_map_repetition_period equal to 0 specifies that the tone map information applies to the current decoded picture only.

tone_map_ repetition_period equal to 1 specifies that the tone map information persists in output order until any of the following conditions are true.

- A new coded video sequence begins
- A picture in an access unit containing a tone mapping SEI message with the same value of tone_map_id is output having PicOrderCnt(°) greater than PicOrderCnt(°CurrPic°).

It is noted that PicOrderCnt(°) indicates POC of a picture, whereas PicOrderCnt(°CurrPic°) indicates POC of a current picture.

tone_map_repetition_period equal to 0 or equal to 1 indicates that another tone mapping SEI message with the same value of tone_map_id may or may not be present.

tone_map_repetition_period greater than 1 specifies that the tone map information persists until any of the following conditions are true.

- A new coded video sequence begins
- A picture in an access unit containing a tone mapping SEI message with the same value of tone_map_id is output having PicOrderCnt(°) greater than PicOrderCnt(°CurrPic°) and less than or equal to PicOrderCnt(°CurrPic°) + tone_ map_repetition_period.

A picture in an access unit may be output but not include a tone mapping SEI message. Similarly, a picture in an access unit may contain one or more tone mapping SEI message but not a tone_map_id_value with the needed "same value". In either of these cases, the tone mapping SEI message from a previous frame would persist for the current frame.

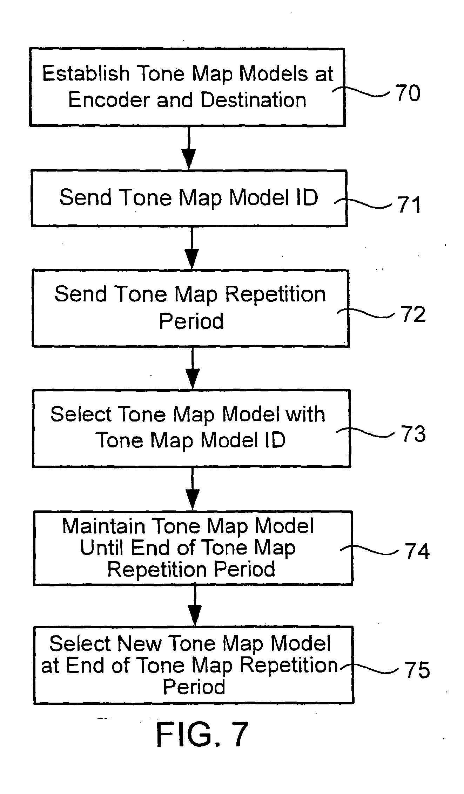

Therefore the below-described method of Figure 7 is an example where the tone_map_repetition_period is higher than 1, and tone mapping SEI messages are only transmitted with pictures when the tone map repetition period of the previous tone mapping SEI message is ending.

tone_map_repetition_period greater than 1 indicates that another tone mapping SEI message with the same value of tone_map_id shall be present for a picture in an access unit that is output having PicOrderCnt(°) greater than PicOrderCnt(°CurrPic°) and less than or equal to PicOrderCnt(°CurrPic°) + tone_map_repetition_period; unless the bitstream ends or a new coded video sequence begins without output of such a picture.

coded_data_bit_depth specifies the bit-depth (of a video sequence which is the target of tone mapping) of the coded data.

sei_ bit_depth specifies the bit-depth of the output (a tone-mapped video sequence) of the dynamic range mapping function (or tone mapping function) described by the SEI message. The tone mapping function specified with a particular sei_bit_depth is suggested to be reasonable for all display bit depths that are equal to or less than the sei_bit_depth.

model_id is a tone map model ID and specifies the tone map model utilized for mapping the coded bit-depth data into the sei_bit_depth range. Values greater than 3 are reserved for future use by the ITU-T | ISO/IEC. Decoders encountering a value of model_id greater than 3 shall ignore (remove from the bitstream and discard) it.

Note - a model_id of 0 corresponds to a linear mapping with clipping; a model_id of 1 corresponds to a sigmoidal mapping; a model_id of 2 corresponds to a user-defined table mapping, and a model_id of 3 corresponds to a piece-wise linear mapping. All mappings are expressed in the RGB color space and applied to each RGB component separately.

min_value is a tone map model parameter used when model_id is 0. min_value specifies the pixel value in the coded bit-depth coded data that maps to the minimum value in the signaled sei_bit_depth, i.e. 0. It is used in combination with the max_value parameter. All values in the coded data that are less than or equal to min_value are mapped to 0 in sei_bit_depth representation.

max_value is a tone map model parameter used when model_id is 0. max_value specifies the pixel value in the coded data that maps to the maximum value in the signaled sei_bit_depth, i.e. $2^{sei\_bit\_depth}-1$. It is used in combination with the min_value parameter. All values in the coded data that are larger than or equal to max_value are mapped to $(2^{sei\_bit\_depth}-1)$ in the sei_bit_depth representation.

sigmoid_midpoint is a tone map model parameter used when model_id is 1. sigmoid_midpoint specifies the value of the coded data (i.e., the X coordinate) that is mapped to the center point of the sei_bit_depth representation, i.e., $2^{sei\_bit\_depth}-1$. This parameter specifies the center location of the sigmoid mapping function that maps the coded_bit_depth to the sei_bit_depth. It is used in combination with the sigmoid_width parameter.

sigmoid_width is a tone map model parameter used when model_id is 1. sigmoid_width specifies the distance between two coded data values that are mapped to the 5% and 95% values of ($2^{sei\_bit\_depth}-1$) in sei_bit_depth representation, respectively. It is used in combination with the sigmoid_midpoint parameter and is interpreted according to the following function:

$$ f(i) = \text{int}\left( \frac{2^{sei\_bit\_depth}-1}{1+\exp\left(\dfrac{-6*(i-sigmoid\_midpoint)}{sigmoid\_width}\right)} + 0.5 \right) \quad for\ i = 0, \Lambda, (2^{coded\_bit\_depth}-1) $$

start_of_coded_interval[ i ] is a tone map model parameter used when model_id is 2. start_of_coded_interval [ i ] specifies the beginning point of an interval in the coded data such that all data within the interval are mapped to value i in the sei_bit_depth representation, i.e., all values in [start_of_coded_interval[i], start_of_coded_interval[i+1]) are mapped to i, where start_of_coded_interval[$2^{sei\_bit\_depth}$] is set to $2^{coded\_bit\_depth}$. The number of bits used for the representation of the sei_to_coded_map is ((coded_data_bit_depth+7)>>3)<<3.

num_pivots is a tone map model parameter used when model_id is 3. num_pivots specifies the number of pivot points in the piece-wise linear mapping function without counting two default end points, (0,0) and ($2^{coded\_data\_bit\_depth}-1$, $2^{sei\_bit\_depth}-1$).

coded_pivot_value[ i ] is a tone map model parameter used when model_id is 3. coded_pivot_value[ i ] specifies the value in the coded_bit_depth corresponding to the i-th pivot point, i.e., the X coordinate of the i-th pivot point. The number of bits used for the representation of the coded_pivot_value is ((coded_data_bit_depth+7)>>3)<<3.

sei_pivot_value[ i ] is a tone map model parameter used when model_id is 3. sei_pivot_value[ i ] specifies the value in the reference sei_bit_depth corresponding to the i-th pivot point, i.e., the Y coordinate of the i-th pivot point. The number of bits used for the representation of the sei_pivot_value is ((sei_bit_depth+7)>>3)<<3.

As described above, the SEI message of the example above includes a tone map ID and a tone map cancel flag. When the tone map cancel flag is 0, the SEI message of the example above further includes a tone map repetition period, a bit-depth of a video sequence which is the target of tone mapping, a bit-depth of a tone-mapped video sequence, a tone map model ID, and 1-3 type(s) of tone map model parameters which vary in accordance with the tone map model ID.

In the table above, what are meant by "C", "Descriptor", and the signs in the "Descriptor" are indicated in Joint Video Team of ITU-T VCEG and ISO/IEC MPEG, "Advanced Video Coding (AVC) - 4th Edition, "ITU-T Rec. H.264 and ISO/IEC 14496-10 (MPEG-Part 10), which was published in January, 2005. That is, "C" indicates a category which specifies the partitioning of slice data into at most three slice data partitions. The meaning of 5 or more category values is not specified. "Descriptor" is a descriptor and specifies the parsing process of each syntax element. The sign "u(n)" is unsigned integer using n bits. The sign "u(v)" is unsigned integer using bits whose number varies in a manner dependent on the value of other syntax elements. As to the sign i(n), the parsing process for this descriptor is specified by the return value of the function read_bits (n) interpreted as a two's complement integer representation with most significant bit written first. The sign ue(v) is unsigned integer which is Exp-Golomb-coded syntax element with the left bit first.

Some embodiments of the present invention comprise methods and systems for selecting and configuring tone map models for use in decoding, transcoding and/or otherwise processing an image. In some embodiments a plurality of tone map models may be established and associated with tone map model identifiers (IDs). These tone map models may be present at an image receiving device (IRD), which may comprise a decoder, transcoder or other image processing device. In some embodiments, the tone map models may be recorded on the IRD where they may be accessed through their associated tone map model IDs. In some embodiments, one or more generalized functions, that may be configured or modified with tone map model parameters may be stored at an IRD where they may be selected and configured through the receipt of selection and configuration data such as a tone map model ID and tone map model parameters. In some embodiments a configurable linear function, a configurable sigmoid function or another configurable function may be resident on an IRD or may be sent to an IRD in conjunction with an image.

A tone map model may be configured with tone map model parameters that help define a tone map relationship, such as a line slope or curvature value. In some exemplary embodiments, a tone map model parameter may be a minimum value of a linear model line, a maximum value of a linear model line, a map sigmoidal midpoint, a map sigmoidal width, a coded interval limit, a piecewise linear model pivot quantity, a piecewise linear model pivot location or other model parameters.

Some embodiments of the present invention may also comprise a tone map identifier (ID) that may identify the purpose of the tone map model. The tone map ID may identify the goal of the tone map model, the function of the tone map model, the reason for application of the tone map model, the input used to select the tone map model, an error or problem intended to be corrected by the tone map model, a device characteristic related to the tone map model, suitable alternatives to the tone map model or some other tone map model-related characteristic. The tone map ID may also be used to guide the image receiving device in selecting a pre-established tone map model or an alternative tone map model or tone map processing technique. In some embodiments, a tone map ID may signify a target bit depth for which a tone map is intended.

Some embodiments of the present invention may comprise a tone map cancel flag. A tone map cancel flag may cancel the persistence of a previous tone mapping message. For example, but not by way of limitation, a tone map cancel flag may be used to stop the application of a previously-selected tone map model or tone map model parameter. A tone map cancel flag may be followed by a message or message portion that identifies a new tone map model or tone map model parameter to be used after the previous one is canceled. In some embodiments, a default tone map model or tone map model parameter may be used when a previous selection is canceled by the tone map cancel flag.

Some embodiments of the present invention may also comprise a tone map repetition period. A tone map repetition period may specify the persistence of a tone map message or selection. A tone map repetition period message may specify a picture order count interval within which another tone mapping message may apply. A tone map repetition period message may also specify that an associated tone map model or tone map model parameter only applies to a current picture or an otherwise identified picture. A tone map repetition period message may also specify that an associated tone map model or tone map model parameter will apply only for a specified time period.

A tone map repetition period message may also specify that an associated tone map model or tone map model parameter will apply until a defined event occurs.

In some embodiments of the present invention, the above-described messages and parameters may be determined at an encoder and signaled to a image receiving device through messages that may or may not be attached or embedded in the image or image bitstream.

[Embodiment 1]

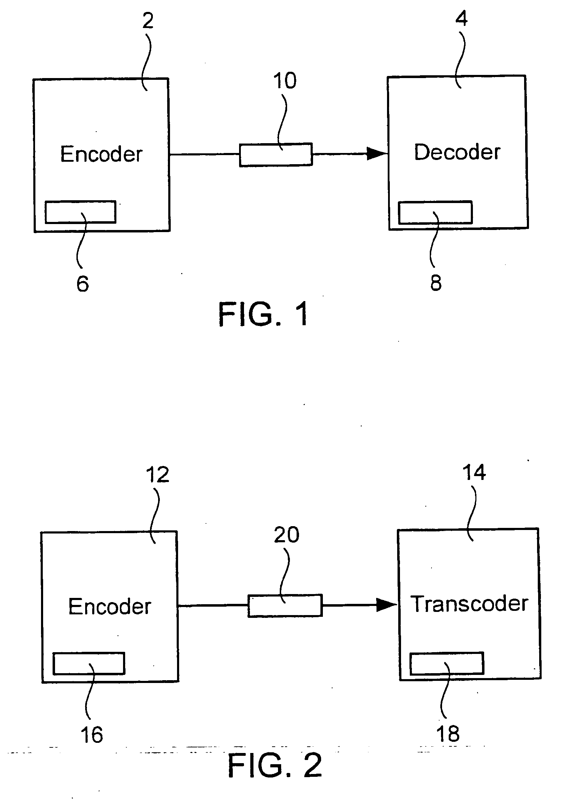

Some embodiments of the present invention may be described with reference to Figure 1. In these embodiments, an encoder 2 may provide image encoding functions and, in some embodiments, image analysis functions. The encoder 2 may comprise a tone map model ID record 6 comprising pre-established tone map model identifiers (IDs) and associated tone map model parameters that may be selected and transmitted with an image 10 to an image receiving device (IRD), such as a decoder 4. The tone map model IDs may signal one or more tone map model selections that are appropriate for processing a particular image. In some embodiments, the tone map model IDs may specify specific tone map models to be used to convert an image to different bit-depths as needed by an IRD, such as a destination display device. In some embodiments, other information may be transferred to the IRD 4, such as a tone map ID, a tone map cancel flag, a tone map repetition period or another parameter. When tone map models are configurable, an encoder 2 may also transmit tone map model parameters (tone map model configuration parameters) to the IRD 4.

In these embodiments, an IRD 4 may comprise a tone map model record 8 comprising tone map models that have been pre-established and associated with tone map model IDs. In some embodiments, a tone map model ID may be associated with a configurable function, such as a sigmoid function or a linear function. When an IRD receives a tone map model ID, the IRD may select a tone map model or function associated with that tone map model ID and apply the identified tone map model or function to an image. Since the tone map models or functions are pre-established and stored on the IRD 4, the tone map model may be selected through a very compact identifier without transmitting the entire tone map model definition or tone map function. This technique allows for efficient selection of a tone map and more frequent tone map changes without burdening the bandwidth with full tone map definition data.

[Embodiment 2]

Some embodiments of the present invention may be described with reference to Figure 2. In these embodiments, an encoder 12 comprises a tone map model ID record 12 of tone map characteristics associated with tone map model IDs. These tone map model IDs and associated parameters and other messages may be transmitted with an image 20 to an IRD, such as a transcoder 14. The transcoder or other IRD may receive the tone map model ID and any associated information and use that tone map model ID and information to select, configure and apply a tone map model or function to an image. Transcoder 14 may comprise a tone map model record 18 that fully defines the characteristics of a tone map model or function and associates tone map models or functions with tone map model IDs. An IRD, such as transcoder 14, may receive a tone map model ID along with an image and use the tone map model ID and any associated information to select a tone map model or function, configure the tone map model or function and apply the tone map model or function to the image.

[Embodiment 3]

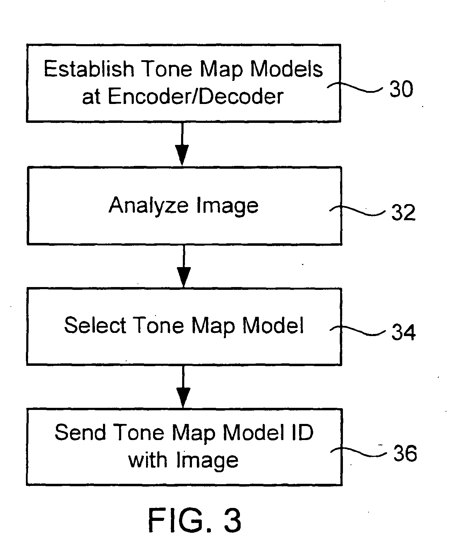

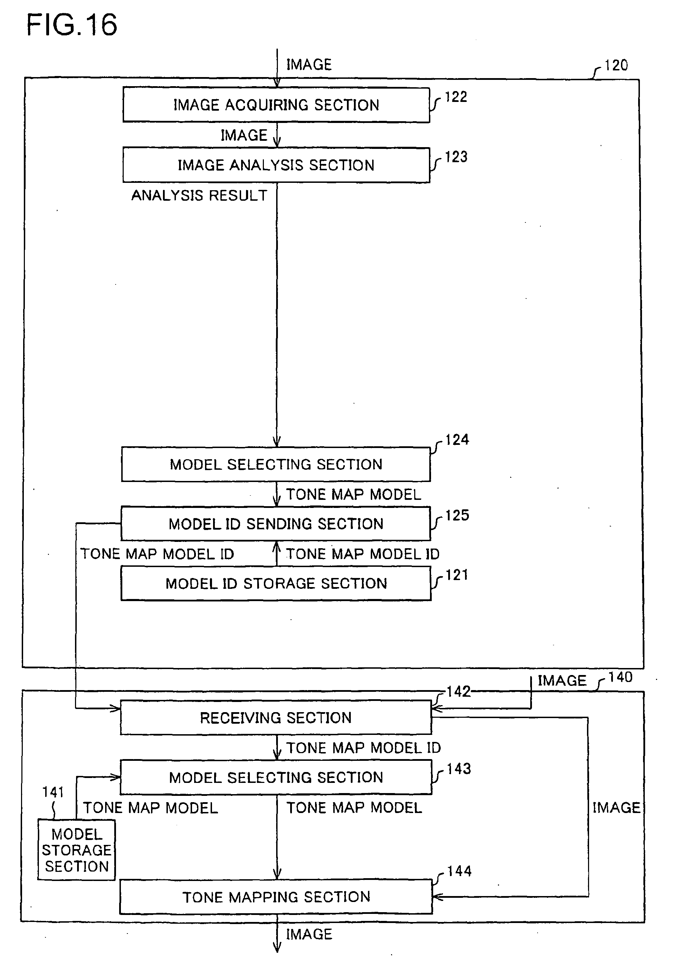

Some embodiments of the present invention may be described with reference to Figures 3 and 16.

As shown in Figure 16, a system of the present embodiment includes an encoder 120 and an image receiving device 140. The encoder 120 includes: a model ID storage section 121 which stores tone map model IDs associated with respective tone map models (or tone map functions); an image acquiring section 122 which acquires an image which is the target of analysis; an image analysis section 123 which analyzes the aforesaid image in order to determine which tone map model (or tone map function) is applied to the obtained image; a model selecting section 124 which selects one or more tone map model (or tone map function) based on the result of the image analysis; and a model ID sending section (identifier transmitter) 125 which transmits a tone map model ID associated with the selected one or more tone map model (or tone map function). The image receiving device 140 includes: a model storage section 141 which stores tone map models (or tone map functions); a receiving section (image receiver) 142 which receives an image which is the target of tone mapping and a tone map model ID from the encoder 120; a model selecting section 143 which selects a tone map model by using the supplied tone map model ID; and a tone mapping section 144 which applies the selected tone map model to the image.

In these embodiments, tone map models are established (30) at the encoder 120 and the image receiving device 140 (decoder) and associated with tone map model IDs. The tone map model IDs are then stored at the model ID storage section 121 of the encoder 120 where the tone map model IDs are associated with image types or other image data. The tone map models or functions are also stored at the model storage section 141 of the image receiving device (IRD) 140, such as a decoder or transcoder. An image acquired by the image acquiring section 122 may then be analyzed (32) by the image analysis section 123 to determine which tone map model or function should be applied to the image. One or more tone map models or functions may then be selected by the model selecting section 124 (34) based on the image analysis and/or other information. A message including tone map model IDs associated with the selected tone map models or functions may then be sent (36) to the receiving section 142 of the IRD 140 for use in selection of a tone map model at the model selecting section 143 of the IRD 140. When multiple tone map model IDs are sent, the model selecting section 143 of the IRD 140 may select one of them based on IRD characteristics, such as the dynamic range of the IRD 140. When the tone map model ID is selected, the tone mapping section 144 can apply a tone map model associated with the selected tone map model ID to the image received by the receiving section 142.

[Embodiment 4]

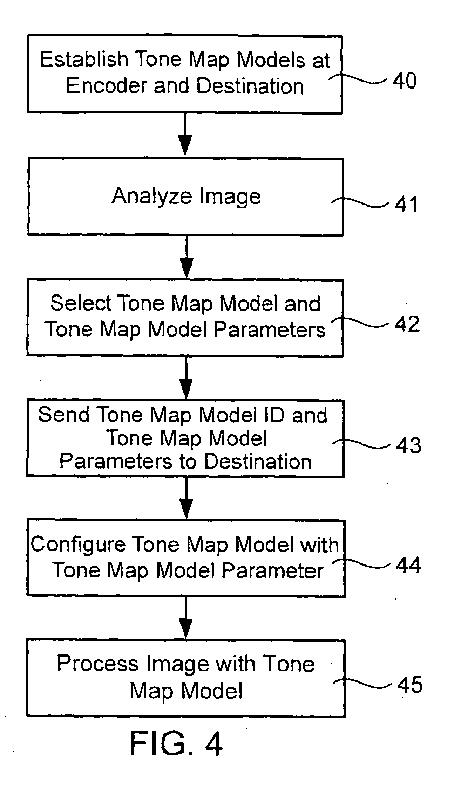

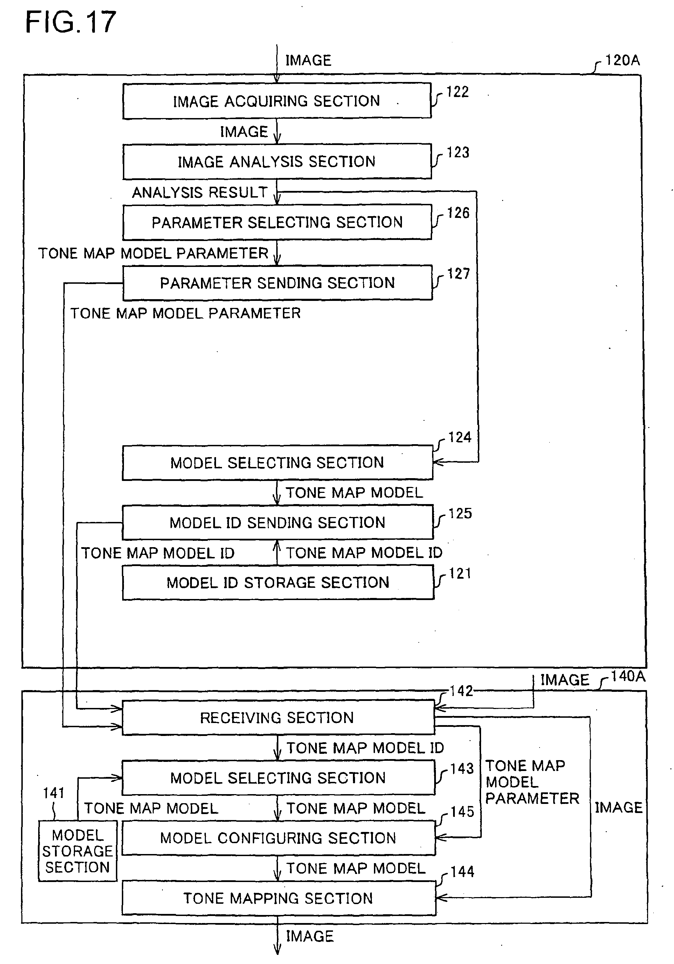

Some embodiments of the present invention may be described with reference to Figures 4 and 17. By the way, members having the same functions are given the same numbers, so that the descriptions are omitted for the sake of convenience.

As shown in Figure 17, a system of the present embodiment is constituted by an encoder (image encoder) 120A and an image receiving device 140A. The encoder 120A includes a model ID storage section 121, an image acquiring section 122, an image analysis section 123, a model selecting section 124, a model ID sending section 125, a parameter selecting section 126 which selects a tone map model parameter based on the result of the image analysis by the image analysis section 123, and a parameter sending section which sends the selected tone map model parameter. The image receiving device 140A includes a model storage section 141, a receiving section (image receiver) 142 which receives an image which is the target of tone mapping and also receives a tone map model ID and a tone map model parameter from the encoder 120A, a model selecting section 143, a model configuring section 145 which carries out the configuration of the selected tone map model by using the supplied tone map model parameter, and a tone mapping section 144 which applies the tone map model thus configured to the image.

In these embodiments, tone map models or functions are established at the encoder 120A and the image receiving device 140A (destination) (40) and associated with tone map model IDs. The tone map model IDs are then stored at the model ID storage section 121 of the encoder 120A where the tone map model IDs are associated with image types or other image data. The tone map models or functions are also stored at the model storage section 141 of the image receiving device (IRD) 140A, such as a decoder or transcoder. An image acquired by the image acquiring section 122 may then be analyzed by the image analysis section 123 (41) to determine which tone map models or functions should be applied to the image and to determine which tone map model parameters should be applied. A tone map model and associated tone map model parameters may then be selected by the model selecting section 124 and the parameter selecting section 126 (42) based on the image analysis and/or other information. A message including the tone map model ID associated with the selected tone map model and the tone map model parameters may then be sent by the model ID sending section 125 and the parameter sending section 127 (43) to the receiving section 142 of the IRD 140A for use in selection and configuration of a tone map model at the model selecting section 143 and the model configuring section 145 of the IRD 140A. The selected tone map model may then be configured (44) using the tone map model parameters having been received by the receiving section 142. Once configured, the configured tone map model may be applied by the tone mapping section 144 (45) to the image having received by the receiving section 142.

[Embodiment 5]

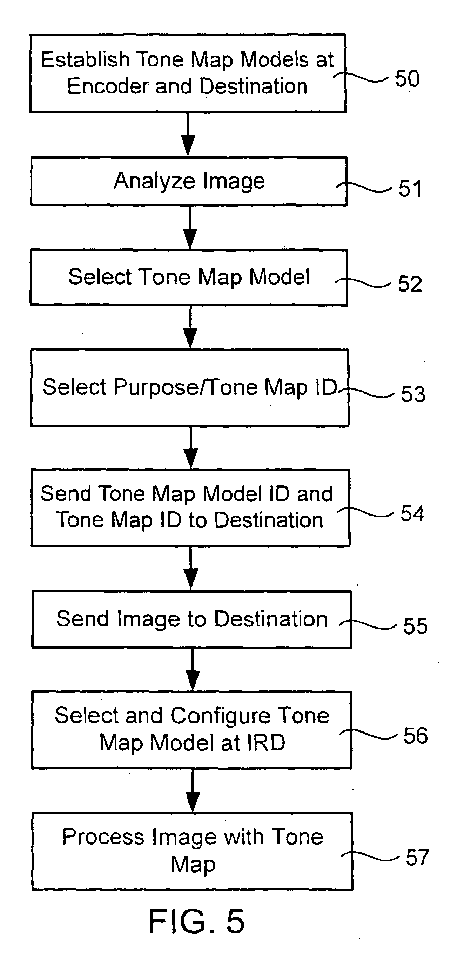

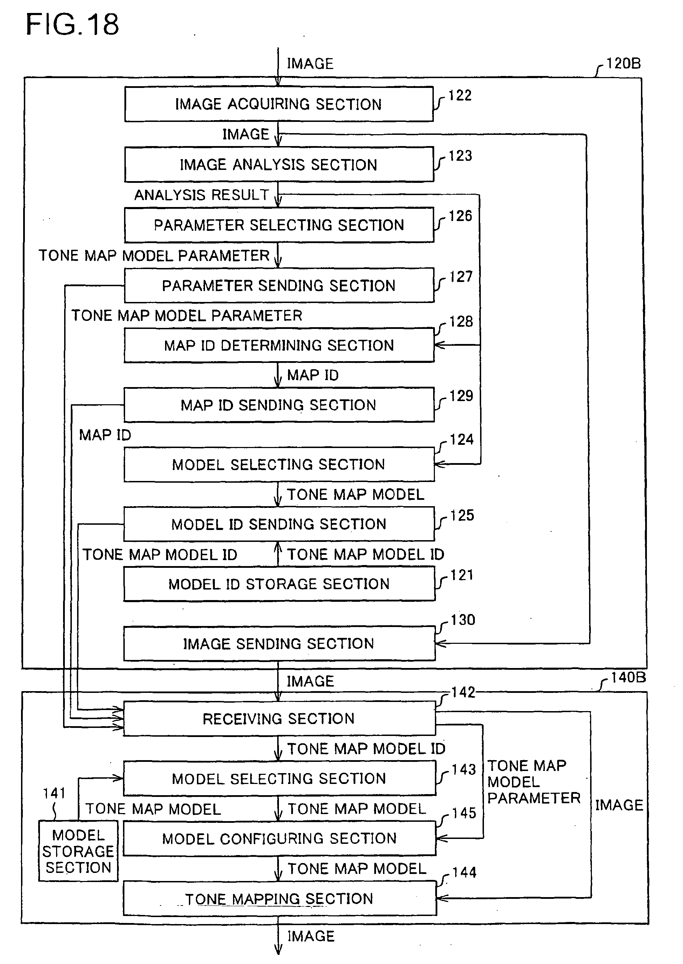

Some embodiments of the present invention may be described with reference to Figures 5 and 18.

As shown in Figure 18, a system of the present embodiment is constituted by an encoder (image encoder) 120B and an image receiving device 140B. The encoder 120B includes a model ID storage section 121, an image acquiring section 122, an image analysis section 123, a model selecting section 124, a model ID sending section 125, a parameter selecting section 126, a parameter sending section 127, a map ID determining section 128 which determines a tone map ID based on the result of the image analysis, a map ID sending section 129 which sends a tone map ID, and an image sending section 130 which sends the aforesaid image. The image receiving device 140B includes a model storage section 141, a receiving section (image receiver) 142 which receives, from the encoder 120, an image, a tone map model ID, a tone map model parameter, and a tone map ID, a model selecting section 143, a model configuring section 145, and a tone mapping section 144 which applies the tone map model thus configured to the image.

In these embodiments, tone map models are established at the encoder 120B and the image receiving device 140B (destination) (50) and associated with tone map model IDs. The tone map IDs are then stored at the model ID storage section 121 of the encoder 120B where the tone map IDs are associated with image types or other image data. The tone map models are also stored at the model storage section 141 of the image receiving device (IRD) 140B, such as a decoder or transcoder. An image acquired by the image acquiring section 122 may then be analyzed by the image analysis section 123 (51) to determine which tone maps should be applied to the image for each of a plurality of display device dynamic ranges. A tone map model ID and associated tone map model parameters may then be selected by the model selecting section 124 and the parameter selecting section 126 (52) for each tone map based on the image analysis and/or other information. The map ID determining section 128 can determine (53) a tone map ID, which may identify a purpose for the application of the tone map model, the goal of the tone map model, the function of the tone map model, the reason for application of the tone map model, the input used to select the tone map model, an error or problem intended to be corrected by the tone map model, a device characteristic related to the tone map model, suitable alternatives to the tone map model or some other tone map model-related characteristic based on the image analysis (51) or other data. The tone map ID may be used to guide the image receiving device 140B in selecting a pre-established tone map model or an alternative tone map model or tone map processing technique. In some embodiments, the tone map ID may identify a converted dynamic range or bit depth to which the tone map will convert an image.

A message including the tone map model ID associated with the selected tone map model, any tone map model parameters and the tone map ID may then be sent by the model ID sending section 125, the parameter sending section 127 and the map ID sending section 129 (54) to the receiving section 142 of the IRD 140B for use in selection and configuration of a tone map model at the model selecting section 143 and the model configuring section 145 of the IRD 140B. The image may also be sent by the image sending section 130 (55) to the receiving section 142 of the IRD 140B. A tone map model may then be selected and configured by the model selecting section 143 and the model configuring section 145 (56) using the tone map model ID received by the receiving section 142, tone map model parameters and the tone map ID. Once configured, the configured tone map model may be applied by the tone mapping section 144 (57) to the image received by the receiving section 142.

The purpose of the tone map ID is to assist the IRD 140B in selecting the best tone mapping process for the display process. For example, an image sequence may be transmitted to the IRD 140B with 12-bits of precision and contain tone mapping information for representing the data of a 10-bit and 8-bit displays. The mapping process for converting from 12-bits to 10-bits could be transmitted as one tone map ID, while the tone mapping process for converting from 12-bits to 8-bits could be transmitted as a second tone map ID.

In case where the tone map ID allows a dynamic range or bit depth after the conversion to be identifiable, the tone mapping section 144 may apply a tone map model to the image (i.e. perform tone mapping) in such a manner as to cause the dynamic range or bit depth to be identifiable by the tone map ID.

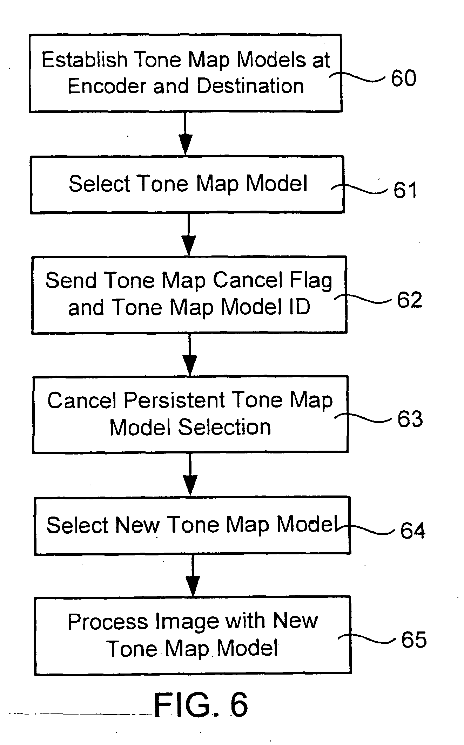

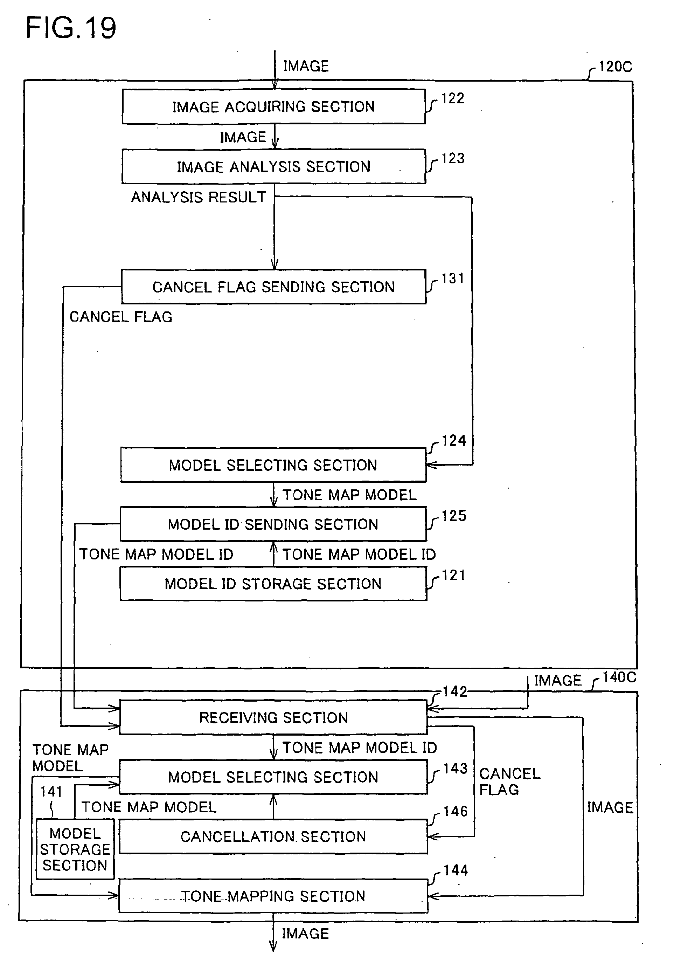

Some embodiments of the present invention may be described with reference to Figures 6 and 19.

As shown in Figure 19, a system of the present embodiment is constituted by an encoder 120C and an image receiving device 140C. The encoder 120C includes a model ID storage section 121, an image acquiring section 122, an image analysis section 123, a model selecting section 124, a model ID sending section 125, and a cancel flag sending section 131 which sends a tone map cancel flag to the image receiving device 140C. The image receiving device 140C includes a model storage section 141, a receiving section (image receiver) 142 which receives an image which is the target of tone mapping and also receives a tone map model ID and a tone map cancel flag from the encoder 120C, a model selecting section 143, a tone mapping section 144, and a cancellation section 146 which cancels the selection of the persistent tone map model.

In these embodiments, tone map models are established at the encoder 120C and the image receiving device 140C (destination) (60) and associated with tone map model IDs. The tone map model IDs are then stored at the model ID storage section 121 of the encoder 120 where the tone map model IDs are associated with image types or other image data. The tone map models or tone map functions (tone map descriptive functions) are also stored at the model storage section 141 of the image receiving device (IRD) 140C, such as a decoder or transcoder. A tone map model (and associated tone map model parameters) may then be selected (61) based on the image analysis of the image acquired by the image acquiring section 122, which is conducted by the image analysis section 123, and/or other information. The cancel flag sending section 131 then may send a tone map cancel flag to the image receiving device 140C, whereas the model ID sending section 125 may send a message including a tone map model ID associated with the selected tone map model to the receiving section 142 of the image receiving device 140C (62). When the receiving section 142 receives the tone map cancel flag, the cancellation section 146 may cancel the persistent tone map model selection, by using the tone map cancel flag (63). A new tone map model selection (64) may then be applied by the tone mapping section 144 (65) to subsequent image processing tasks.

[Embodiment 7]

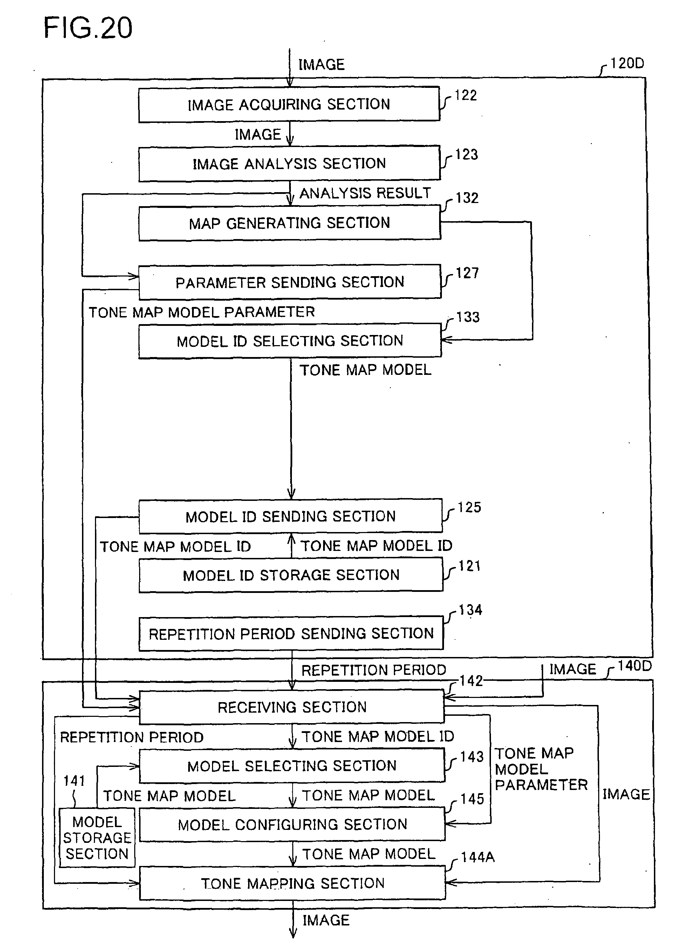

Some embodiments of the present invention may be described with reference to Figures 7 and 20.

As shown in Figure 20, a system of the present embodiment is constituted by an encoder (image encoder) 120D and an image receiving device 140D. The encoder 120D includes a model ID storage section 121, an image acquiring section 122, an image analysis section 123, a model ID sending section 125, a parameter sending section 127, a map generating section 132 which generates a tone map based on the result of the image analysis by the image analysis section 123, a model selecting section 133 which selects a tone map model ID corresponding to the generated tone map, a model selecting section 126A which selects a tone map model parameter corresponding to the generated tone map, and a repetition period sending section 131 which sends a tone map repetition period to the image receiving device 140D. The image receiving device 140D includes a model storage section 141, a receiving section (image receiver) 143 which receives an image which is the target of tone mapping and also receives a tone map model ID, a tone map model parameter, and a tone map repetition period from the encoder 120D, a model selecting section 143, a model configuring section 145, and a tone mapping section 144A which maintains the selection of the tone map model and related tone map model parameter for the tone map repetition period.

In these embodiments, tone map models are established at the encoder 120D and the image receiving device 140D (destination) (70) and associated with tone map model IDs. The tone map model IDs are then stored at the model ID storage section 121 of the encoder 120D where the tone map model IDs are associated with image types or other image data. The tone map models or tone map functions are also stored at the model storage section 141 of the image receiving device (IRD) 140D, such as a decoder or transcoder. One or more tone maps may then be generated by the map generating section 132, based on the image analysis of the image obtained by the image acquiring section 122, which is conducted by the image analysis section 123, and/or other information. The tone map model IDs and associated tone map model parameters corresponding to these tone maps may then be selected by the model ID selecting section 133 and the parameter selecting section 126A, and the model ID sending section 125 and the parameter sending section 127 may send, to the receiving section 142 of the image receiving device 140D, a message including the tone map model ID and associated tone map model (71). A tone map repetition period may also be sent by the repetition period sending section 134 (72) to the receiving section 142 of the IRD 140D. At the image receiving device 140D, the model selecting section 143 and the model configuring section 145 may select a tone map model and other related tone map parameter and the tone mapping section 144 may apply the selected tone map model and tone map model parameter to the image received by the receiving section 142. This tone map model selection and related tone map model parameter may be maintained (74) at the model selecting section 143 and the model configuring section 145 of the IRD 140D for a period specified in the tone map repetition period. This period may be a specified time interval or may be related to a processing period for a series of images or frames or portions thereof regardless of the traditional time period associated with processing the image or images. After the period has expired, a new tone map model or related tone map model parameter may be selected (75) or a default value may be selected.

[Embodiment 8]

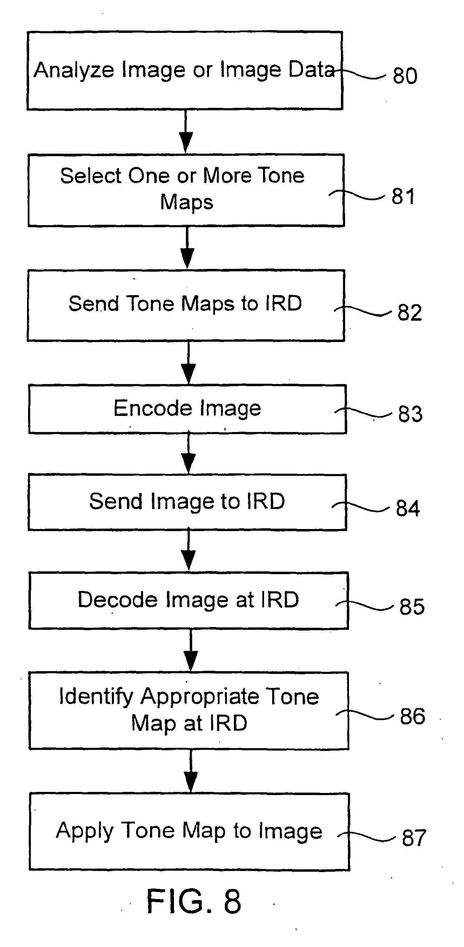

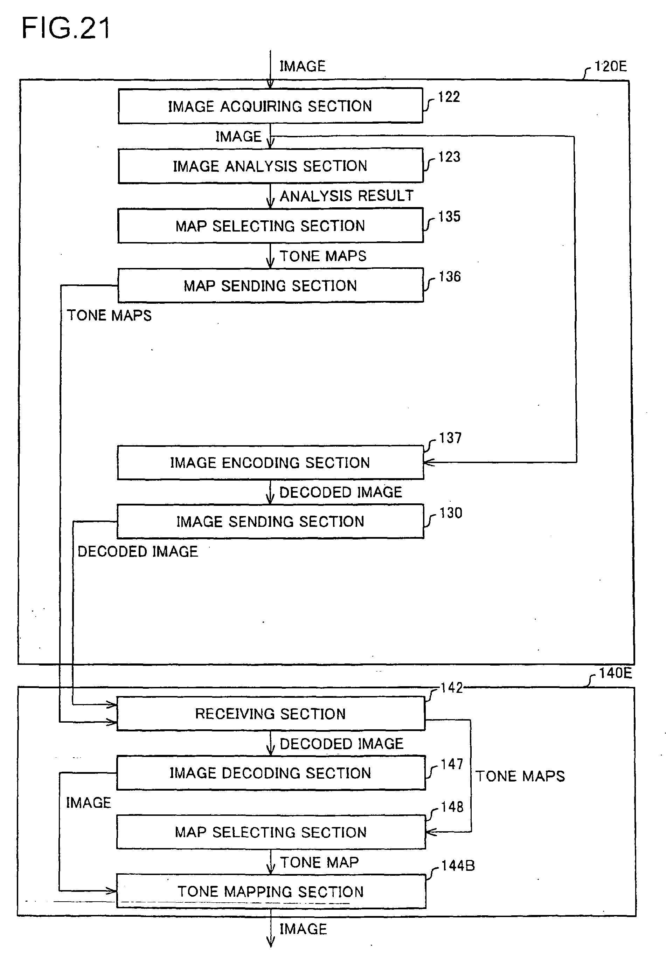

Some embodiments of the present invention may be described with reference to Figures 8 and 21.

As shown in Figure 21, a system of the present embodiment is constituted by an encoder 120E and an image receiving device 140E. The encoder 120E includes an image acquiring section 122, an image analysis section 123, a map selecting section 135 which selects a tone map, a map sending section (map transmitter) 136 which sends plural tone maps, an image encoding section 137 which encodes an image, and an image sending section 130. The image receiving device 140E includes a receiving section (map receiver) 142 which receives plural tone maps and an image from the encoder 120E, an image decoding section 147 which decodes an image, a map selecting section (map selector) 148 which selects one of said plural tone maps, and a tone mapping section 144B which applies the selected tone map to the image.

In these embodiments, the image analysis section 123 analyzes or reads an image or image data acquired by the image acquiring section 122 (80) to determine image characteristics. In some embodiments, this step may comprise that the image analysis section 123 reads an image file header or other metadata to determine image characteristics. In some embodiments, the image analysis section 123 directly analyzes the image to obtain information in regard to the image characteristics. Once the information of the image characteristics is obtained by the image analysis section 123, the map selecting section 135 may select one or more tone maps (typically plural tone maps) (81) based on the image characteristics. Each of the selected tone maps may correspond to a different display device or IRD characteristic. In some embodiments, a tone map may be selected by the map selecting section 135 for various standard IRD bit-depths.

Then the map sending section 136 sends a message including tone maps to the receiving section 142 of the image receiving device 140E (82). The image may be encoded by the image encoding section 137 (83) and the encoded image is sent by the image sending section 130 to the receiving section 142 of the image receiving device 140E (84). At the IRD 140E, after the receiving section 142 receives the image, the image decoding section 147 decodes the image (85) and the map selecting section 148 reviews the tone maps to determine (86) which tone map best accommodates the characteristics of the IRD 140E. In some embodiments, the map selecting section 148 uses a tone map ID assigned to a tone map to determine which tone map should be used for a particular IRD characteristic. In some embodiments, a tone map ID may identify the bit-depth for which the tone map is intended to be used. Once a tone map is selected by the map selecting section 148 (86), the tone mapping section 144B may apply the tone map to the image (87).

[Embodiment 9]

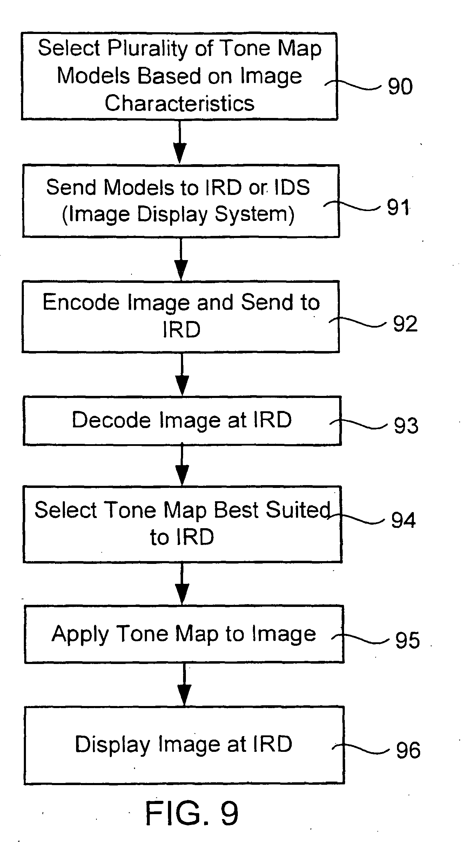

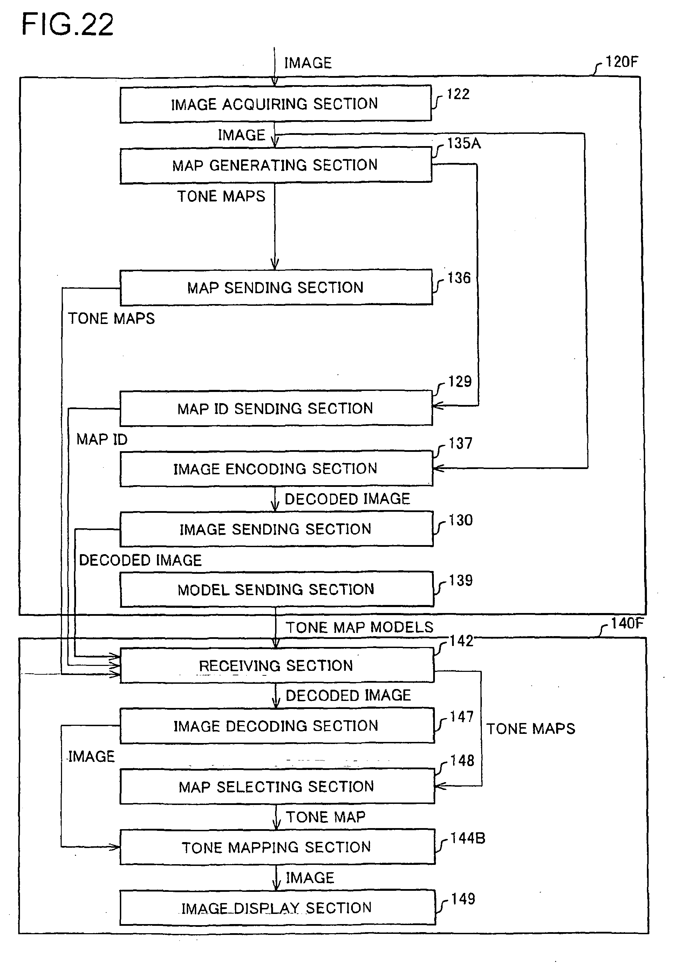

Some embodiments of the present invention may be described with reference to Figures 9 and 22.

As shown in Figure 22, a system of the present embodiment is constituted by an encoder 120F and an image receiving device 140F. The encoder 120F includes an image acquiring section 122, a map generating section 135A (or map selecting section) which generates (or selects) plural tone maps, a model sending section 139 which sends plural tone map models, a map sending section 136, a map ID sending section 129, an image encoding section 137, and an image sending section 130. The image receiving device (receiving device) 140F includes a receiving section (receiver, map receiver) 142 which receives, from the encoder 120F, plural tone map models, plural tone maps, a tone map ID, and an image, an image decoding section 147, a map selecting section (selector, map selector) 148, a tone mapping section (tone map processor) 144B, and an image display section 149 which displays a tone-mapped image.

In these embodiments, the map generating section 135A (or map selecting section) of the encoder 120F may generate or select a plurality of tone maps based on image characteristics or other information. In some embodiments, these tone maps may be described with reference to a tone map model ID associated to the tone maps and accompanying tone map model parameters. Different tone maps in the plurality of tone maps may be distinguished by a tone map ID. The tone map ID may also identify a tone map purpose, associated to the tone map ID, such as a destination bit-depth and a dynamic range to be obtained by the tone map. The model sending section 139 may send a message including tone map models (91) to the receiving section 142 of the image receiving device 140F. This may be done by sending the entire tone map model, by sending a tone map model ID and associated tone map model parameters or by some other method. The map sending section 136 and the map ID sending section 129 may send a tone map ID with each tone map in the plurality of tone maps. Typically, the image encoding section 137 and the image sending section 130 will encode the image acquired by the image acquiring section 122 and send it to the receiving section 142 of the image receiving device 140F (92). At the IRD 140F, the image decoding section 147 decodes the image (93) and the map selecting section 148 reviews the tone maps to determine (94) the tone map best suited to the IRD 140F. This review may comprise the use of tone map ID data and other tone map data. The selected tone map may then be applied by the tone mapping section 144B (95) to the decoded image, so that a tone-mapped image is generated.

After application of the tone map, the image may be displayed on the image display section 149 of the image receiving device 140F (96).

The map selecting section 148 may select a tone map corresponding to the dynamic range of the image receiving device 140F. This selection may be carried out based on information included in the message. A tone map may be selected in accordance with the information indicating preference of the image receiving device. The information indicating the preference of the image receiving device may be included in a message. The map selecting section 148 may be arranged such that a selected tone map is constructed using at least one tone map model parameter associated with the tone map.

[Embodiment 10]

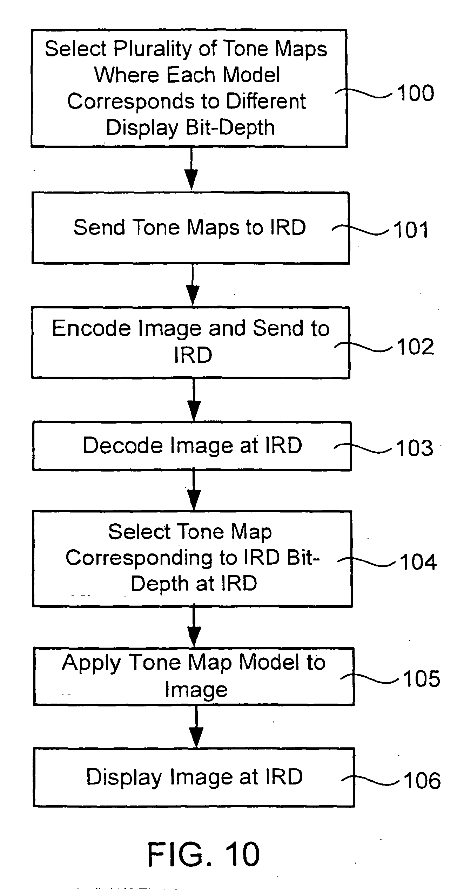

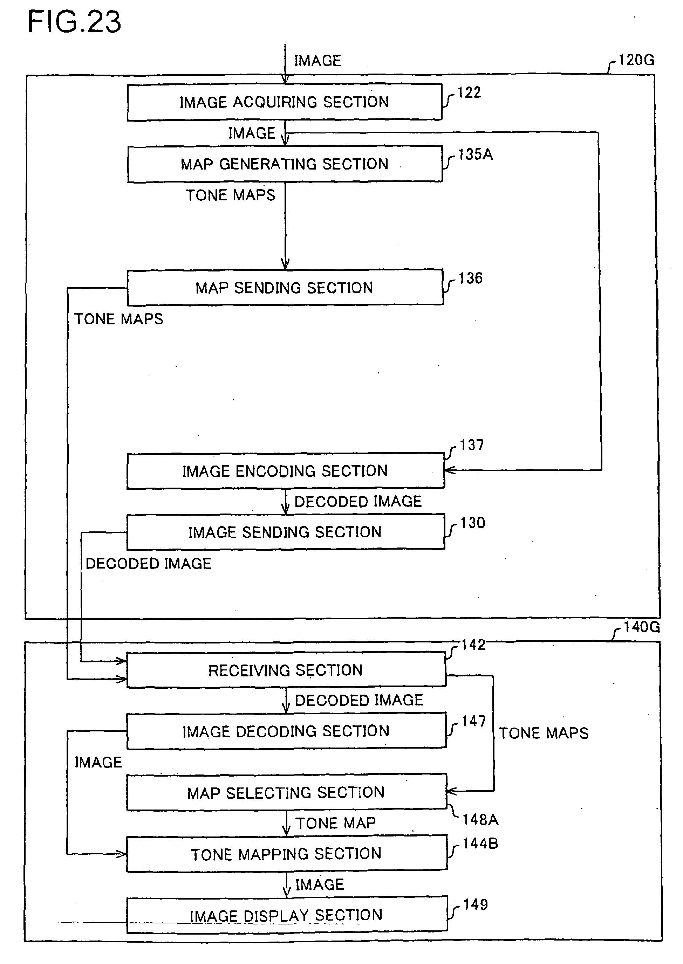

Some embodiments of the present invention may be described with reference to Figures 10 and 23.

As shown in Figure 23, a system of the present embodiment is constituted by an encoder 120G and an image receiving device 140G The encoder 120G includes an image acquiring section 122, a map generating section 135A (or map selecting section), a map sending section 136, an image encoding section 137, and an image sending section 130. The image receiving device 140G includes a receiving section (map receiver) 142 which receives plural tone maps and an image from the encoder 120G, an image decoding section 147, a map selecting section (map selector) 148A which selects a tone map corresponding to the bit-depth of the image display section 149, a tone mapping section 144B, and an image display section 149.

In these embodiments, in the map generating section 135A (or map selecting section) of the encoder 120G, a plurality of tone maps may be selected or generated (100).

Each tone map in the plurality of tone maps may correspond to a different display device bit-depth. For example, one tone map may convert the image from a 12-bit bit-depth to a 10-bit bit-depth and another tone map may convert the image from a 12-bit bit-depth to an 8-bit bit-depth. These tone maps may be represented by a complete tone map definition, by a tone map model ID and associated tone map model parameters or by other methods. These tone maps may also be associated with tone map IDs that may define the purpose of the tone map, such as the destination (image display section 149) bit-depth.

However the tone map is defined, the map sending section 136 sends a message including the tone map or tone map data to the receiving section 142 of the image receiving device 140G (101). Also, the image encoding section 137 may encode the image and send it to the receiving section 142 of the image receiving device 140G (102). After the image decoding section 147 decodes the image (103), the tone mapping section 144B may apply a tone map to the image. Since multiple tone maps have been sent, the decoder (image receiving device 140G) must select (104) from the plurality of tone maps. Typically, the map selecting section 148A selects a tone map that best matches the IRD characteristics. For example, the tone map that the maps to the bit-depth of the image display section 149 of the IRD 140G may be selected. Alternatively, information from the viewer/user may lead to the selection of the tone map. Exemplary information may include viewing condition information, ambient light level information, information about the power state of the viewing device, and other recipient (image receiving device) preference information. The tone mapping section 144B may apply the selected tone map to the image (105), and display the image on the image display section 149 of the image receiving device 140G (106).

When the IRD 140G is a transcoder or will not be the device on which the image is to be displayed, the map selecting section 148A will select a tone map that matches the destination display device which is outside the image receiving device 140G. Then the tone mapping section 144B may apply the selected tone map to the image (105), and display the image on the image display section 149 of the image receiving device 140G (106).

[Embodiment 11]

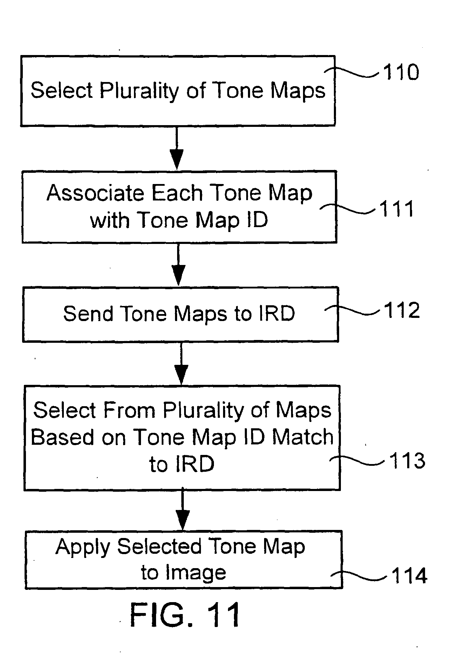

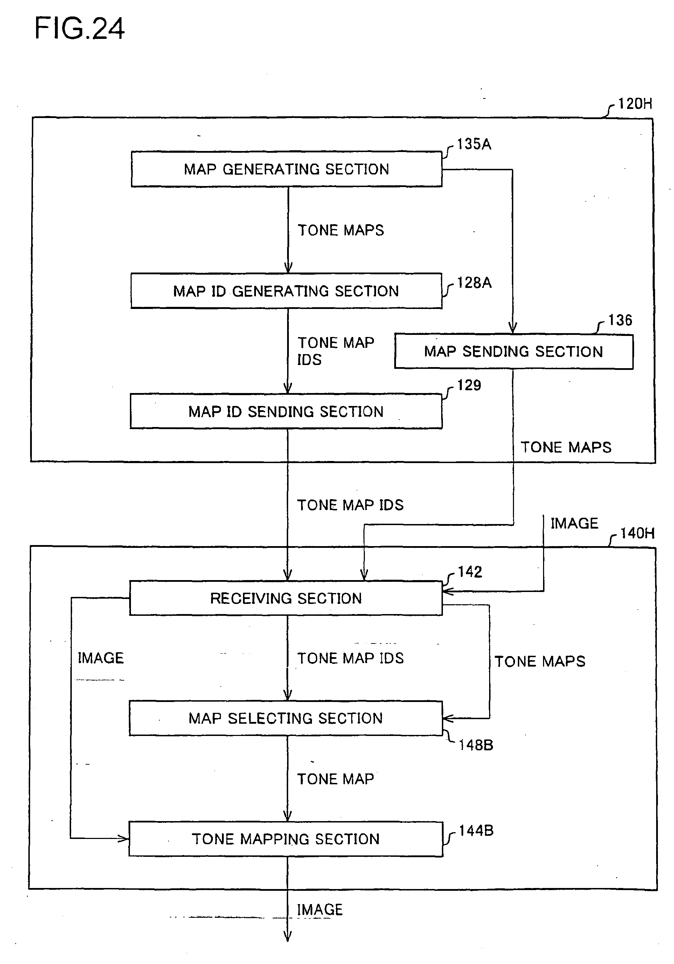

Some embodiments of the present invention may be described with reference to Figures 11 and 24.

As shown in Figure 24, a system of the present embodiment is constituted by an encoder 120H (or image transmitter) and an image receiving device 140H. The encoder 120H includes a map generating section 135A (or map selecting section), a map ID generating section 128A which generates plural tone map IDs associated with respective tone maps, a map sending section 136, and a map ID sending section 129. The image receiving device 140H includes a receiving section (map receiver) 142 which receives an image which is the target of tone mapping and also receives plural tone maps and plural tone map IDs from the encoder 120H, a map selecting section (map selector) 148B which selects a tone map suitable for the image receiving device 140H based on a tone map ID, and a tone mapping section 144B.

In these embodiments, the map generating section 135A (or map selecting section) of the encoder 120H or the image transmitter selects or generates a plurality of tone maps(110). The map ID generating section 128A may associate (111) each tone map with a tone map ID that may identify the purpose of the tone map or otherwise serve as a unique identifier of the tone map. The map sending section 136 and the map ID sending section 129 may send a message including the tone maps and corresponding tone map IDs (112) to the receiving section 142 of the image receiving device 140H, where a tone map suitable for the image receiving device 140H is selected by the map selecting section 148B of the image receiving device 140H (113) from the plurality of tone maps based on the tone map ID of each tone map. The selected tone map may then be applied (114) by the tone mapping section 144B to the image received by the receiving section 142.

In the embodiments 4, 5, and 7, a tone map model ID and a tone map model parameter may represent a tone map. A tone map may be established in the image receiving device 140A, 140B, and 140D, the image receiving device 140A, 140B, and 140D may identify a tone map using a tone map model ID and a tone map model parameter, and the tone map may be applied to an image.

In the embodiments 3-11, the tone map may be used for converting an image from a first dynamic range (higher dynamic range in particular) to a second dynamic range (lower dynamic range in particular).

The image is preferably included in a bitstream when supplied to the image receiving device 140, 140A-140E. The message is preferably associated with an image, and it is further preferable that the message is embedded in the bitstream including the image with which the image is associated and sent from the encoder 120, 120A-120E to the image receiving device 140, 140A-140E. The message may be transmitted outside the bitstream in which the image is transmitted.

Plural tone maps may be established in the image receiving device 140, 140A-140E, and the message may allow the image receiving device to select one of the tone maps that corresponds to the dynamic range or preference information of the image receiving device 140, 140A-140E.

In the embodiments 3-11, the image receiving device 140, 140A-140E may further include a transmitter which sends a tone-mapped image to a destination such as a decoder or an image display device. With this, it is possible to display an image at the destination, even if the image receiving device 140, 140A-140E is a transcoder or the image receiving device 140, 140A-140E cannot display an image.

In the embodiments 3-11, the tone map models may be the aforesaid exemplary models 0-3.

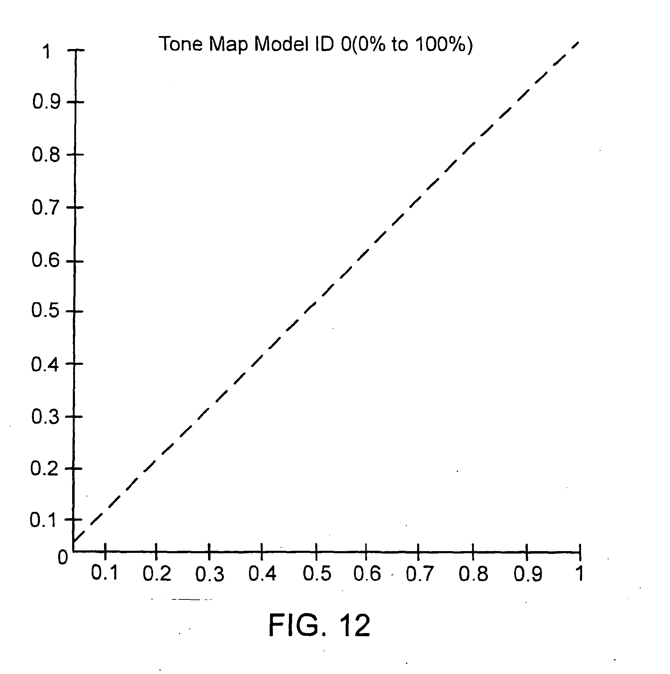

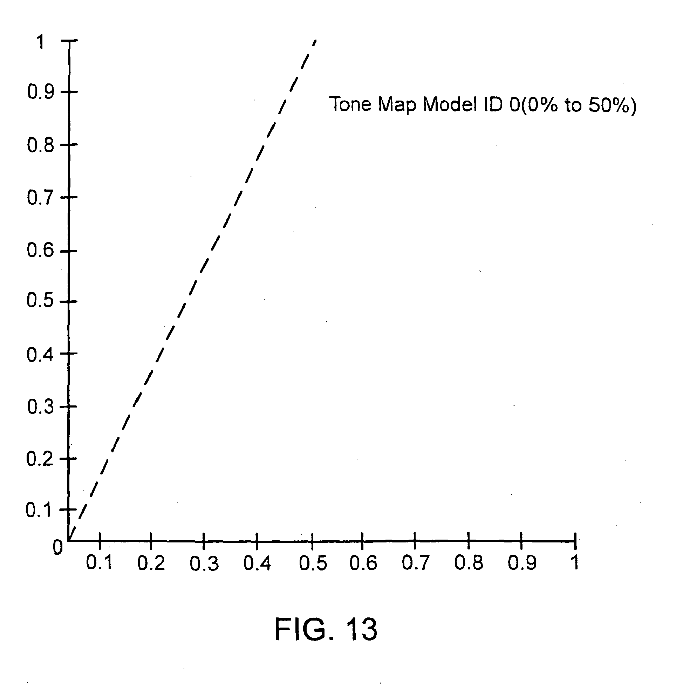

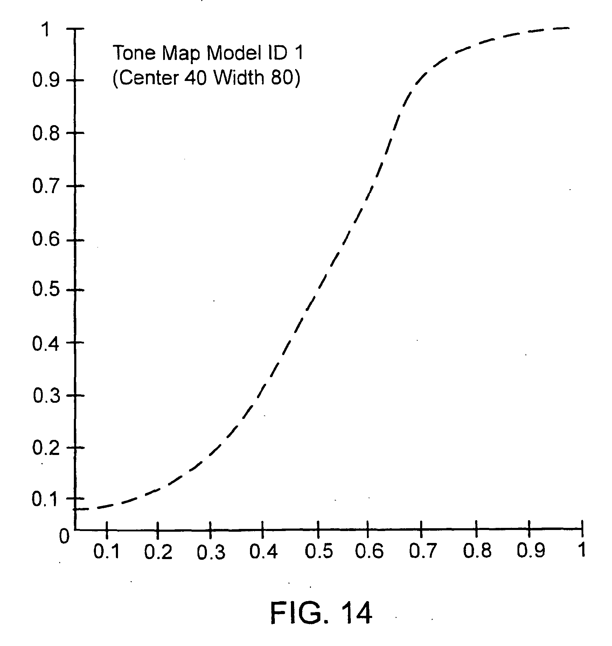

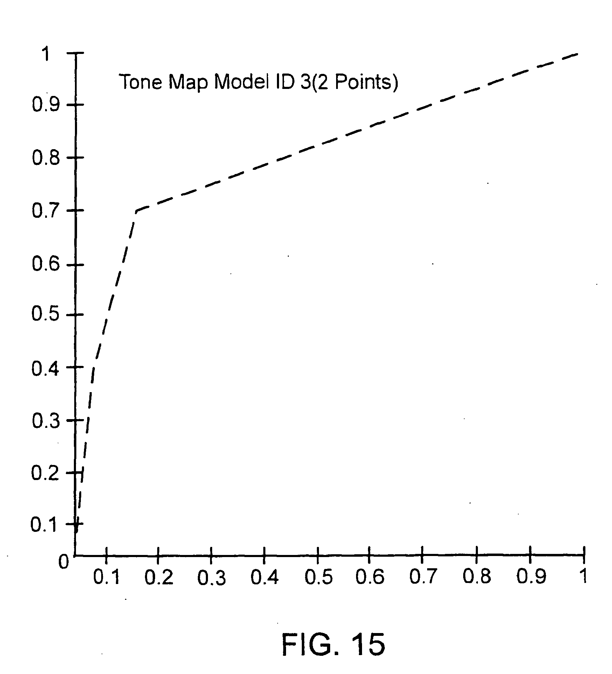

Figures 12-15 illustrate exemplary tone maps that may be used in embodiments of the present invention. Figure 12 shows an example of a tone map in which a tone map model ID is 0, a tone map model parameter min_value is 0%, and a tone map model parameter max_value is 100%. Figure 13 shows an example of a tone map in which a tone map model ID is 0, a tone map model parameter min_value is 0%, and a tone map model parameter max_value is 50%. Figure 14 shows an example of a tone map in which a tone map model ID is 1, a tone map model parameter sigmoid_midpoint is 40%, and a tone map model parameter sigmoid_width is 80%. Figure 15 shows an example of a tone map in which a tone map model ID is 3 and a tone map model parameter num_povots is 2. In Figures 12-14, the horizontal axis indicates an intensity (relative value assuming that the maximum intensity is 1) before tone mapping, whereas the vertical axis indicates an intensity after tone mapping.

An embodiment based on a proper combination of technical means disclosed in different embodiments is encompassed in the technical scope of the present invention. For example, the cancel flag sending section 131 of the embodiment 6 may be added to the encoder 120, 120A, 120B, 120D-H of the embodiments 3-5 and 7-11. Also, the repetition period sending section 134 of the embodiment 7 may be added to the encoder 120, 120A-120C, and 120E-120H of the embodiments 3-6 and 8-11.

The terms and expressions which have been employed in the foregoing specification are used therein as terms of description and not of limitation, and there is no intention in the use of such terms and expressions of excluding equivalence of the features shown and described or portions thereof, it being recognized that the scope of the invention is defined and limited only by the claims which follow.

**Claims**

1. A system for converting an image from a first dynamic range to a second dynamic range by applying a configured tone map model to said image with said first dynamic range, thereby producing a tone-mapped image with said second dynamic range, said system being
**characterized by**
an image receiving device comprising:

a model storage section (141) which stores tone map models, each being Identified by a tone map model identifier (tone_map_id) and each expressing basic tone mapping operations;
a receiver (142) for receiving the image having said first dynamic range and for receiving a message, wherein said message comprises a tone map model identifier (model_id) and at least one tone map model parameter;
a selector (143) for selecting a tone map model from the plurality of stored tone map models by said received tone map model identifier (model_id),
a model configuration section (145) for configuring the selected tone map model based on said at least one tone map model parameter; and
a tone mapping section (144) for applying said configured tone map model to said image with said first dynamic range.

2. A system for converting an image from a first dynamic range to a second dynamic range by applying a tone map to said image with said first dynamic range, thereby producing a tone-mapped image with said second dynamic range, said system being
**characterized by**
an image receiving device comprising:

a receiver (142) for receiving the image having said first dynamic range and for receiving a message, wherein said message comprises a plurality of tone maps, wherein each of said tone maps is associated with a tone map ID serving as a unique identifier of a tone map;
a selector (148) for selecting a tone map from said plurality of tone maps by using said tone map IDs associated with said plurality of tone maps to determine which tone map is used for a particular characteristic of the image receiving device; and
a tone mapping section (144) for applying said tone map to said image with said first dynamic range.

3. A system as described in claim 1, wherein said plurality of tone map models comprises one of a linear map with clipping, a sigmoidal map, a user-defined lookup table map, and a piecewise linear map.

4. A system as described in claim 1 or claim 2, further comprising a transmitter for transmitting said tone-mapped image.

5. A system as described in claim 1 or claim 2, wherein said message is a Supplemental Enhancement Information (SEI) message.

6. A system as described in claim 1 or claim 2, wherein said message further comprises a tone map cancel flag for canceling the persistence of a previous tone map message.

7. A system as described in claim 1 or claim 2, wherein said message further comprises a tone map repetition period message that specifies the persistence of a tone map selection.

8. A system as described in claim 2, wherein said message allows said selector (148) to select said tone map so that said tone map corresponds to a dynamic range of an image receiving device (140F).

9. A method for converting an image from a first dynamic range to a second dynamic range by applying a configured tone map model to said image with said first dynamic range, thereby producing a tone-mapped image with said second dynamic range, said method being
**characterized by**
carrying out in an image receiving device the steps of:

storing tone map models, each being identified by a tone map model identifier (model_id) and each expressing basic tone mapping operations;
receiving the image having said first dynamic range and receiving a message, wherein said message comprises a tone map model identifier (model_id) and at least one tone map model parameter;
selecting a tone map model from the plurality of stored tone map models by said tone map model identifier (model_id), and
configuring said selected tone map model based on said at least one tone map model parameter; and
applying said configured tone map model to said image with said first dynamic range.

10. A method for converting an image from a first dynamic range to a second dynamic range by applying a tone map to said image with said first dynamic range, thereby producing a tone-mapped image with said second dynamic range, said method being
**characterized by** carrying out in an image receiving device the steps of:

receiving the image having said first dynamic range and receiving a message, wherein said message comprises a plurality of tone maps, wherein each of said tone maps is associated with a tone map ID serving as a unique identifier of a tone map;
selecting a tone map from said plurality of tone maps according to at least one characteristic of the image receiving device by using said tone map IDs associated with said plurality of tone maps to determine which tone map is used for a particular characteristic of the image receiving device: and
applying said tone map to said image with said first dynamic range.

11. A method as described in claim 9 or claim 10, wherein said second dynamic range corresponds to a dynamic range of an image receiving device.

12. A method as described in claim 9, wherein said tone map model represented by said tone map model ID is a tone map model selected from the group consisting of a linear map with clipping, a sigmoidal map, a user-defined lookup table map, or a piecewise linear map.

13. A method as described in claim 9 or claim 10 further comprising receiving a bitstream, wherein said bitstream comprises said image with said first dynamic range.

14. A method as described in claim 13, wherein said bitstream further comprises said message.

15. A method as described in one of claims 9. 10 or 13 further comprising transmitting said image with said second dynamic range.

16. A method as described in claim 9 or claim 10 wherein said message is transmitted outside the bitstream in which said image is transmitted.

17. A method as described in claim 10, wherein, plural tone maps are established, and said message allows said image receiving device (140, 140A, 140B, 140D) to select one of said plurality of tone maps that corresponds to a dynamic range of an image receiving device (140, 140A, 140B, 140D).

18. A method as described in claim 9 or claim 10, wherein said message is a Supplemental Enhancement Information (SEI) message.

19. A method as described in claim 9 or claim 10, wherein said message further comprises a tone map ID for each of said at least one tone maps, wherein said tone map ID identifies a dynamic range for said tone map.

20. A method as described in claim 9 or claim 10, wherein said message further comprises a tone map cancel flag for canceling the persistence of a previous tone map message.

21. A method as described in claim 9 or claim 10, wherein said message further comprises a tone map repetition period message that specifies the persistence of a tone map selection.


**Patentansprüche**

1. System zum Umsetzen eines Bildes von einem ersten Dynamikbereich in einen zweiten Dynamikbereich durch Anwenden eines konfigurierten Tonemap-Modells auf das Bild mit dem ersten Dynamikbereich, um **dadurch** ein mittels Tonemap umgesetztes Bild mit dem zweiten Dynamikbereich zu erzeugen, wobei das System **gekennzeichnet ist durch** eine Bildempfangsvorrichtung, die enthält:

   einen Modellspeicherabschnitt (141), der Tonemap-Modelle speichert, die jeweils **durch** eine Tonemap-Modellkennung (tone_map_id) identifiziert sind und die jeweils Tonemapping-Grundoperationen ausdrücken;
   einen Empfänger (142) zum Empfangen des Bildes mit dem ersten Dynamikbereich und zum Empfangen einer Nachricht, wobei die Nachricht eine Tonemap-Modellkennung (model_id) und wenigstens einen Tonemap-Modellparameter enthält;
   einen Selektor (143) zum Auswählen eines Tonemap-Modells aus den mehreren gespeicherten Tonemap-Modellen **durch** die empfangene Tonemap-Modellkennung (model_id),
   einen Modellkonfigurationsabschnitt (145) zum Konfigurieren des ausgewählten Tonemap-Modells auf der Grundlage des wenigstens einen Tonemap-Modellparameters; und
   einen Tonemapping-Abschnitt (144) zum Anwenden des konfigurierten Tonemap-Modells auf das Bild mit dem ersten Dynamikbereich.

2. System zum Umsetzen eines Bildes von einem ersten Dynamikbereich in einen zweiten Dynamikbereich durch Anwenden einer Tonemap auf das Bild mit dem ersten Dynamikbereich, um **dadurch** ein mittels Tonemap umgesetztes Bild mit dem zweiten Dynamikbereich zu erzeugen, wobei das System **gekennzeichnet ist durch** eine Bildempfangsvorrichtung, die enthält:

   einen Empfänger (142) zum Empfangen des Bildes mit dem ersten Dynamikbereich und zum Empfangen einer Nachricht, wobei die Nachricht mehrere Tonemaps enthält, wobei jeder der Tonemaps eine Tonemap-ID zugeordnet ist, die als eine eindeutige Kennung einer Tonemap dient;
   einen Selektor (148) zum Auswählen einer Tonemap aus den mehreren Tonemaps unter Verwendung der Tonemap-IDs, die den mehreren Tonemaps zugeordnet sind, um zu bestimmen, welche Tonemap für eine bestimmte Eigenschaft der Bildempfangsvorrichtung verwendet wird; und
einen Tonemapping-Abschnitt (144) zum Anwenden der Tonemap auf das Bild mit dem ersten Dynamikbereich.

**3.** System nach Anspruch 1, wobei die mehreren Tonemap-Modelle eine lineare Map mit Abschneidung, eine S-förmige Map, eine Map einer nutzerdefinierten Nachschlagetabelle und eine stückweise lineare Map enthalten.

**4.** System nach Anspruch 1 oder Anspruch 2, das ferner einen Sender zum Senden des mittels Tonemap umgesetzten Bildes enthält.

**5.** System nach Anspruch 1 oder Anspruch 2, wobei die Nachricht eine Supplemental-Enhancement-Information-Nachricht (SEI-Nachricht) ist.

**6.** System nach Anspruch 1 oder Anspruch 2, wobei die Nachricht ferner einen Tonemap-Abbruch-Merker zum Abbrechen des Fortbestehens einer vorhergehenden Tonemap-Nachricht enthält.

**7.** System nach Anspruch 1 oder Anspruch 2, wobei die Nachricht ferner eine Tonemap-Wiederholungsperiodennachricht enthält, die das Fortbestehen einer Tonemap-Auswahl spezifiziert.

**8.** System nach Anspruch 2, wobei die Nachricht ermöglicht, dass der Selektor (148) die Tonemap in der Weise auswählt, dass die Tonemap einem Dynamikbereich einer Bildempfangsvorrichtung (140F) entspricht.

**9.** Verfahren zum Umsetzen eines Bildes von einem ersten Dynamikbereich in einen zweiten Dynamikbereich durch Anwenden eines konfigurierten Tonemap-Modells auf das Bild mit dem ersten Dynamikbereich, um **dadurch** ein mittels Tonemap umgesetztes Bild mit dem zweiten Dynamikbereich zu erzeugen, wobei das Verfahren
**gekennzeichnet ist durch**
Ausführen der folgenden Schritte in einer Bildempfangsvorrichtung:

Speichern von Tonemap-Modellen, die jeweils **durch** eine Tonemap-Modellkennung (model_id) identifiziert sind und die jeweils Tonemapping-Grundoperationen ausdrücken;
Empfangen des Bildes mit dem ersten Dynamikbereich und Empfangen einer Nachricht, wobei die Nachricht eine Tonemap-Modellkennung (model_id) und wenigstens einen Tonemap-Modellparameter enthält;
Auswählen eines Tonemap-Modells aus den mehreren gespeicherten Tonemap-Modellen **durch** die Tonemap-Modellkennung (model_id), und
Konfigurieren des ausgewählten Tonemap-Modells auf der Grundlage des wenigstens einen Tonemap-Modellparameters; und
Anwenden des konfigurierten Tonemap-Modells auf das Bild mit dem ersten Dynamikbereich.

**10.** Verfahren zum Umsetzen eines Bildes von einem ersten Dynamikbereich in einen zweiten Dynamikbereich durch Anwenden einer Tonemap auf das Bild mit dem ersten Dynamikbereich, um **dadurch** ein mittels Tonemap umgesetztes Bild mit dem zweiten Dynamikbereich zu erzeugen, wobei das Verfahren
**gekennzeichnet ist durch** die Ausführung der folgenden Schritte in einer Bildempfangsvorrichtung:

Empfangen des Bildes mit dem ersten Dynamikbereich und Empfangen einer Nachricht, wobei die Nachricht mehrere Tonemaps enthält, wobei jeder der Tonemaps eine Tonemap-ID zugeordnet ist, die als eine eindeutige Kennung einer Tonemap dient;
Auswählen einer Tonemap aus den mehreren Tonemaps in Übereinstimmung mit wenigstens einer Eigenschaft der Bildempfangsvorrichtung unter Verwendung der Tonemap-IDs, die den mehreren Tonemaps zugeordnet sind, um zu bestimmen, welche Tonemap für eine bestimmte Eigenschaft der Bildempfangsvorrichtung verwendet wird; und
Anwenden der Tonemap auf das Bild mit dem ersten Dynamikbereich.

**11.** Verfahren nach Anspruch 9 oder Anspruch 10, wobei der zweite Dynamikbereich einem Dynamikbereich einer Bildempfangsvorrichtung entspricht.

**12.** Verfahren nach Anspruch 9, wobei das durch die Tonemap-Modell-ID repräsentierte Tonemap-Modell ein Tonemap-Modell ist, das aus der Gruppe ausgewählt wird, die aus einer linearen Map mit Abschneidung, aus einer S-förmigen Map, aus einer Map einer nutzerdefinierten Nachschlagetabelle oder aus einer stückweise linearen Map besteht.

**13.** Verfahren nach Anspruch 9 oder Anspruch 10, das ferner das Empfangen eines Bitstroms enthält, wobei der Bitstrom das Bild mit dem ersten Dynamikbereich enthält.

**14.** Verfahren nach Anspruch 13, wobei der Bitstrom ferner die Nachricht enthält.

**15.** Verfahren nach einem der Ansprüche 9, 10 oder 13, das ferner das Übertragen des Bildes mit dem zweiten Dynamikbereich enthält.

**16.** Verfahren nach Anspruch 9 oder Anspruch 10, wobei die Nachricht außerhalb des Bitstroms, in dem das Bild übertragen wird, übertragen wird.

**17.** Verfahren nach Anspruch 10, wobei mehrere Tonemaps festgesetzt werden und wobei die Nachricht ermöglicht, dass die Bildempfangsvorrichtung (140, 140A, 140B, 140D) eine der mehreren Tonemaps, die einem Dynamikbereich einer Bildempfangsvorrichtung (140, 140A, 140B, 140D) entspricht, auswählt.

**18.** Verfahren nach Anspruch 9 oder Anspruch 10, wobei die Nachricht eine Supplemental-Enhancement-Information-Nachricht (SEI-Nachricht) ist.

**19.** Verfahren nach Anspruch 9 oder Anspruch 10, wobei die Nachricht ferner eine Tonemap-ID für jede der wenigstens einen Tonemaps enthält, wobei die Tonemap-ID einen Dynamikbereich für die Tonemap identifiziert.

**20.** Verfahren nach Anspruch 9 oder Anspruch 10, wobei die Nachricht ferner einen Tonemap-Abbruch-Merker zum Abbrechen des Fortbestehens einer vorhergehenden Tonemap-Nachricht enthält.

**21.** Verfahren nach Anspruch 9 oder Anspruch 10, wobei die Nachricht ferner eine Tonemap-Wiederholungsperiodennachricht enthält, die das Fortbestehen einer Tonemap-Auswahl spezifiziert.

**Revendications**

**1.** Système pour convertir une image, d'une première plage dynamique vers une seconde plage dynamique, en appliquant un modèle configuré de mappage des tons à ladite image présentant ladite première plage dynamique, produisant ainsi une image après mappage des tons présentant ladite seconde plage dynamique, ledit système étant **caractérisé par**
un dispositif de réception d'image, comprenant :

une section de stockage de modèles (141) laquelle stocke des modèles de mappage des tons, chacun étant identifié par un identifiant de modèle de mappage des tons (tone_map_id) et chacun exprimant des opérations de base de mappage des tons ;
un récepteur (142) pour recevoir l'image présentant ladite première plage dynamique et pour recevoir un message, dans lequel ledit message comprend un identifiant de modèle de mappage des tons (model_id) et au moins un paramètre de modèle de mappage des tons ;
un sélecteur (143) pour sélectionner un modèle de mappage des tons à partir de la pluralité de modèles stockés de mappage des tons, par le biais dudit identifiant de modèle de mappage des tons reçu (mode)_id) ;
une section de configuration de modèle (145) pour configurer le modèle sélectionné de mappage des tons sur la base dudit au moins un paramètre de mappage des tons ; et
une section de mappage des tons (144) pour appliquer ledit modèle configuré de mappage des tons à ladite image présentant ladite première plage dynamique.

**2.** Système destiné à convertir une image, d'une première plage dynamique vers une seconde plage dynamique, en appliquant un mappage des tons à ladite image présentant ladite première plage dynamique, produisant ainsi une image après mappage des tons présentant ladite seconde plage dynamique, ledit système étant **caractérisé par**
un dispositif de réception d'image, comprenant :

un récepteur (142) pour recevoir l'image présentant ladite première plage dynamique et pour recevoir un message, dans lequel ledit message comprend une pluralité de mappages des tons, dans lequel chacun desdits mappages des tons est associé à un identifiant de mappage des tons servant d'identifiant unique d'un mappage des tons ;
un sélecteur (148) pour sélectionner un mappage des tons à partir de ladite pluralité de mappages des tons, en utilisant lesdits identifiants de mappage des tons associés à ladite pluralité de mappages des tons, en vue de déterminer quel mappage des tons est utilisé pour une caractéristique particulière du dispositif de réception d'image ; et
une section de mappage des tons (144) pour appliquer ledit mappage des tons à ladite image présentant ladite première plage dynamique.

3. Système selon la revendication 1, dans lequel ladite pluralité de modèles de mappage des tons comporte l'une parmi un mappage linéaire avec écrêtage, un mappage sigmoïde, un mappage de table de conversion définie par l'utilisateur, et un mappage linéaire brisé.

4. Système selon la revendication 1 ou la revendication 2, comprenant en outre un émetteur pour transmettre ladite image après mappage des tons.

5. Système selon la revendication 1 ou la revendication 2, dans lequel ledit message est un message d'informations supplémentaires d'amélioration (SEI).

6. Système selon la revendication 1 ou la revendication 2, dans lequel ledit message comprend en outre un fanion d'annulation de mappage des tons, pour annuler la persistance d'un message de mappagc des tons précédent.

7. Système selon la revendication 1 ou la revendication 2, dans lequel ledit message comprend en outre un message de période de répétition de mappage des tons qui spécifie la persistance d'une sélection de mappage des tons.

8. Système selon la revendication 2, dans lequel ledit message autorise ledit sélecteur (148) à sélectionner ledit mappage des tons, de sorte que ledit mappage des tons corresponde à une plage dynamique d'un dispositif de réception d'image (140F).

9. Procédé pour convertir une image, d'une première plage dynamique vers une seconde plage dynamique, en appliquant un modèle configuré de mappage des tons à ladite image présentant ladite première plage dynamique, produisant ainsi une image après mappage des tons présentant ladite seconde plage dynamique, ledit procédé étant **caractérisé par**
la mise en oeuvre dans un dispositif de réception d'image des étapes consistant à :

stocker des modèles de mappage des tons, chacun étant identifié par un identifiant de modèle de mappage des tons (model_id) et chacun exprimant des opérations de base de mappage des tons ;
recevoir l'image présentant ladite première plage dynamique et recevoir un message, dans lequel ledit message comprend un identifiant de modèle de mappage des tons (model_id) et au moins un paramètre de modèle de mappage des tons ;
sélectionner un modèle de mappage des tons à partir de la pluralité de modèles stockés de mappage des tons, par le biais dudit identifiant de modèle de mappage des tons (model_id) ; et
configurer ledit modèle sélectionné de mappage des tons sur la base dudit au moins un paramètre de modèle de mappage des tons ; et
appliquer ledit modèle configuré de mappage des tons à ladite image présentant ladite première plage dynamique.

10. Procédé pour convertir une image, d'une première plage dynamique vers une seconde plage dynamique, en appliquant un mappage des tons à ladite image présentant ladite première plage dynamique, produisant ainsi une image après mappage des tons présentant ladite seconde plage dynamique, ledit procédé étant
**caractérisé par** la mise en oeuvre, dans un dispositif de réception d'image, des étapes consistant à :

recevoir l'image présentant ladite première plage dynamique et recevoir un message, dans lequel ledit message comprend une pluralité de mappage des tons, dans lequel chacun desdits mappagc des tons est associé à un identifiant de mappage des tons servant d'identifiant unique d'un mappage des tons ;
sélectionner un mappage des tons à partir de ladite pluralité de mappages des tons selon au moins une caractéristique du dispositif de réception d'image, en utilisant lesdits identifiants) de mappage des tons associés à ladite pluralité de mappages des tons, en vue de déterminer quel mappage des tons est utilisé pour une caractéristique particulière du dispositif de réception d'image ; et

appliquer ledit mappage des tons à ladite image présentant ladite première plage dynamique.

11. Procédé selon la revendication 9 ou la revendication 10, dans lequel ladite seconde plage dynamique correspond à une plage dynamique d'un dispositif de réception d'image.

12. Procédé selon la revendication 9, dans lequel ledit modèle de mappage des tons représenté par ledit identifiant de modèle de mappage des tons est un modèle de mappage des tons sélectionné dans le groupe comportant un mappage linéaire avec écrêtage, un mappage sigmoïde, un mappage de table de conversion définie par l'utilisateur ou un mappage linéaire brisé.

13. Procédé selon la revendication 9 ou la revendication 10, comprenant en outre l'étape consistant à recevoir un flux binaire, dans lequel ledit fllux binaire comprend ladite image présentant ladite première plage dynamique.

14. Procédé selon la revendication 13, dans lequel ledit flux binaire comprend en outre ledit message.

15. Procédé selon l'une quelconque des revendications 9, 10 ou 13, comprenant en outre l'étape consistant à transmettre ladite image présentant ladite seconde plage dynamique.

16. Procédé selon la revendication 9 ou la revendication 10, dans lequel ledit message est transmis en dehors du flux binaire dans lequel ladite image est transmise.

17. Procédé selon la revendication 10, dans lequel des mappage pluriels des tons sont établis, et ledit message autorise ledit dispositif de réception d'image (140, 140A, 14UB, 140D) à sélectionner un mappage, parmi ladite pluralité de mappage des tons, qui correspond à une plage dynamique d'un dispositif de réception d'image (140, 140A, 140B, 140D).

18. Procédé selon la revendication 9 ou la revendication 10, dans lequel ledit message est un message d'informations supplémentaires d'amélioration (SEI).

19. Procédé selon la revendication 9 ou la revendication 10, dans lequel ledit message comporte en outre un identifiant de mappage des tons pour chacun desdits au moins un mappage des tons, dans lequel ledit identifiant de mappage des tons identifie une Plage dynamique pour ledit mappage des tons.

20. Procédé selon la revendication 9 ou la revendication 10, dans lequel ledit message comporte en outre un fanion d'annulation de mappage des tons pour annuler la persistance d'un message de mappage des tons précédent.

21. Procédé selon la revendication 9 ou la revendication 10, dans lequel ledit message comporte en outre un message de période de répétition de mappage des tons qui spécifie la persistance d'une sélection de mappage des tons.

FIG. 1

FIG. 2

Establish Tone Map Models
at Encoder/Decoder — 30

↓

Analyze Image — 32

↓

Select Tone Map Model — 34

↓

Send Tone Map Model ID
with Image — 36

# FIG. 3

Establish Tone Map Models at
Encoder and Destination — 40

Analyze Image — 41

Select Tone Map Model and
Tone Map Model Parameters — 42

Send Tone Map Model ID and
Tone Map Model
Parameters to Destination — 43

Configure Tone Map Model with
Tone Map Model Parameter — 44

Process Image with Tone
Map Model — 45

FIG. 4

```
┌─────────────────────────────┐
│   Establish Tone Map Models at  │──── 50
│     Encoder and Destination     │
└─────────────────────────────┘
               │
               ▼
┌─────────────────────────────┐
│        Analyze Image            │──── 51
└─────────────────────────────┘
               │
               ▼
┌─────────────────────────────┐
│      Select Tone Map Model      │──── 52
└─────────────────────────────┘
               │
               ▼
┌─────────────────────────────┐
│   Select Purpose/Tone Map ID    │──── 53
└─────────────────────────────┘
               │
               ▼
┌─────────────────────────────┐
│    Send Tone Map Model ID and   │──── 54
│     Tone Map ID to Destination  │
└─────────────────────────────┘
               │
               ▼
┌─────────────────────────────┐
│      Send Image to Destination  │──── 55
└─────────────────────────────┘
               │
               ▼
┌─────────────────────────────┐
│     Select and Configure Tone   │──── 56
│        Map Model at IRD          │
└─────────────────────────────┘
               │
               ▼
┌─────────────────────────────┐
│     Process Image with Tone     │──── 57
│              Map                │
└─────────────────────────────┘
```

FIG. 5

Establish Tone Map Models at Encoder and Destination — 60

Select Tone Map Model — 61

Send Tone Map Cancel Flag and Tone Map Model ID — 62

Cancel Persistent Tone Map Model Selection — 63

Select New Tone Map Model — 64

Process Image with New Tone Map Model — 65

## FIG. 6

Establish Tone Map Models at
Encoder and Destination ⌐~70

Send Tone Map Model ID ~71

Send Tone Map Repetition
Period ~72

Select Tone Map Model with
Tone Map Model ID ~73

Maintain Tone Map Model
Until End of Tone Map
Repetition Period ~74

Select New Tone Map Model
at End of Tone Map Repetition ~75
Period

# FIG. 7

```
Analyze Image or Image Data  ──── 80
              │
              ▼
Select One or More Tone      ──── 81
         Maps
              │
              ▼
Send Tone Maps to IRD        ──── 82
              │
              ▼
Encode Image                 ──── 83
              │
              ▼
Send Image to IRD            ──── 84
              │
              ▼
Decode Image at IRD          ──── 85
              │
              ▼
Identify Appropriate Tone    ──── 86
       Map at IRD
              │
              ▼
Apply Tone Map to Image      ──── 87
```

FIG. 8

Select Plurality of Tone Map
Models Based on Image
Characteristics ⟍ 90

↓

Send Models to IRD or IDS
(Image Display System) ⟍ 91

↓

Encode Image and Send to
IRD ⟍ 92

↓

Decode Image at IRD ⟍ 93

↓

Select Tone Map Best Suited
to IRD ⟍ 94

↓

Apply Tone Map to Image ⟍ 95

↓

Display Image at IRD ⟍ 96

FIG. 9

Select Plurality of Tone Maps
Where Each Model
Corresponds to Different
Display Bit-Depth — 100

Send Tone Maps to IRD — 101

Encode Image and Send to
IRD — 102

Decode Image at IRD — 103

Select Tone Map
Corresponding to IRD Bit-
Depth at IRD — 104

Apply Tone Map Model to
Image — 105

Display Image at IRD — 106

# FIG. 10

Select Plurality of Tone Maps — 110

↓

Associate Each Tone Map with Tone Map ID — 111

↓

Send Tone Maps to IRD — 112

↓

Select From Plurality of Maps Based on Tone Map ID Match to IRD — 113

↓

Apply Selected Tone Map to Image — 114

# FIG. 11

FIG. 12

FIG. 13

FIG. 14

FIG. 15

# FIG.16

IMAGE ↓                                                                    ⌐120

| IMAGE ACQUIRING SECTION | ⌐122 |

IMAGE ↓

| IMAGE ANALYSIS SECTION | ⌐123 |

ANALYSIS RESULT

| MODEL SELECTING SECTION | ⌐124 |

↓ TONE MAP MODEL

| MODEL ID SENDING SECTION | ⌐125 |

TONE MAP MODEL ID    ↑ TONE MAP MODEL ID

| MODEL ID STORAGE SECTION | ⌐121 |

IMAGE ⌐140

| RECEIVING SECTION | ⌐142 |

↓ TONE MAP MODEL ID

| MODEL SELECTING SECTION | ⌐143 |

141    TONE MAP MODEL    TONE MAP MODEL    IMAGE

| MODEL STORAGE SECTION |

| TONE MAPPING SECTION | ⌐144 |

↓ IMAGE

# FIG.17

IMAGE ↓ 120A

| IMAGE ACQUIRING SECTION | 122 |

IMAGE ↓

| IMAGE ANALYSIS SECTION | 123 |

ANALYSIS RESULT ↓

| PARAMETER SELECTING SECTION | 126 |

TONE MAP MODEL PARAMETER ↓

| PARAMETER SENDING SECTION | 127 |

TONE MAP MODEL PARAMETER

| MODEL SELECTING SECTION | 124 |

↓ TONE MAP MODEL

| MODEL ID SENDING SECTION | 125 |

TONE MAP MODEL ID ↑ TONE MAP MODEL ID

| MODEL ID STORAGE SECTION | 121 |

IMAGE ↓ 140A

142

| RECEIVING SECTION |

↓ TONE MAP MODEL ID

| MODEL SELECTING SECTION | 143 | TONE MAP MODEL PARAMETER |

141

TONE MAP MODEL ↓ TONE MAP MODEL 145

IMAGE

| MODEL STORAGE SECTION | MODEL CONFIGURING SECTION |

↓ TONE MAP MODEL 144

| TONE MAPPING SECTION |

↓ IMAGE

EP 1 845 704 B1

# FIG.18

```
                    ↓ IMAGE                              ┌ 120B
┌──────────────────────────────────────────────────────────┐
│   ┌──────────────────────────────────────┐  ┌ 122         │
│   │    IMAGE ACQUIRING SECTION            │               │
│   └──────────────────────────────────────┘               │
│              IMAGE ↓                                      │
│   ┌──────────────────────────────────────┐  ┌ 123         │
│   │    IMAGE ANALYSIS SECTION             │               │
│   └──────────────────────────────────────┘               │
│       ANALYSIS RESULT ↓                                   │
│   ┌──────────────────────────────────────┐  ┌ 126         │
│   │    PARAMETER SELECTING SECTION        │               │
│   └──────────────────────────────────────┘               │
│  TONE MAP MODEL PARAMETER ↓                               │
│   ┌──────────────────────────────────────┐  ┌ 127         │
│   │    PARAMETER SENDING SECTION          │               │
│   └──────────────────────────────────────┘               │
│   TONE MAP MODEL PARAMETER              ┌ 128              │
│   ┌──────────────────────────────────────┐               │
│   │    MAP ID DETERMINING SECTION         │               │
│   └──────────────────────────────────────┘               │
│              ↓ MAP ID                                     │
│   ┌──────────────────────────────────────┐  ┌ 129         │
│   │    MAP ID SENDING SECTION             │               │
│   └──────────────────────────────────────┘               │
│   MAP ID                                ┌ 124             │
│   ┌──────────────────────────────────────┐               │
│   │    MODEL SELECTING SECTION            │               │
│   └──────────────────────────────────────┘               │
│              ↓ TONE MAP MODEL                             │
│   ┌──────────────────────────────────────┐  ┌ 125         │
│   │    MODEL ID SENDING SECTION           │               │
│   └──────────────────────────────────────┘               │
│  TONE MAP MODEL ID    ↑ TONE MAP MODEL ID                 │
│   ┌──────────────────────────────────────┐  ┌ 121         │
│   │    MODEL ID STORAGE SECTION           │               │
│   └──────────────────────────────────────┘               │
│                                         ┌ 130             │
│   ┌──────────────────────────────────────┐               │
│   │    IMAGE SENDING SECTION             │               │
│   └──────────────────────────────────────┘               │
└──────────────────────────────────────────────────────────┘
                    ↓ IMAGE              ┌ 142      ┌ 140B
┌──────────────────────────────────────────────────────────┐
│   ┌──────────────────────────────────────┐               │
│   │    RECEIVING SECTION                  │               │
│   └──────────────────────────────────────┘               │
│              ↓ TONE MAP MODEL ID        TONE MAP          │
│   ┌──────────────────────────────────────┐ ┌143 MODEL     │
│   │    MODEL SELECTING SECTION            │    PARAMETER   │
│   └──────────────────────────────────────┘          IMAGE │
│  141      ↓TONE MAP MODEL  ↓ TONE MAP MODEL  ┌ 145         │
│  ┌──────┐ ┌──────────────────────────────────┐            │
│  │MODEL │ │    MODEL CONFIGURING SECTION      │            │
│  │STORAGE│└──────────────────────────────────┘            │
│  │SECTION│     ↓ TONE MAP MODEL      ┌ 144                 │
│  └──────┘ ┌──────────────────────────────────┐            │
│           │    TONE MAPPING SECTION           │            │
│           └──────────────────────────────────┘            │
└──────────────────────────────────────────────────────────┘
                    ↓ IMAGE
```

# FIG.19

IMAGE ↓                                                      ⌐120C

| IMAGE ACQUIRING SECTION | ⌐122 |

IMAGE ↓

| IMAGE ANALYSIS SECTION | ⌐123 |

ANALYSIS RESULT

| CANCEL FLAG SENDING SECTION | ⌐131 |

CANCEL FLAG

| MODEL SELECTING SECTION | ⌐124 |

↓ TONE MAP MODEL

| MODEL ID SENDING SECTION | ⌐125 |

TONE MAP MODEL ID      ↑ TONE MAP MODEL ID

| MODEL ID STORAGE SECTION | ⌐121 |

| IMAGE ⌐140C

⌐142

| RECEIVING SECTION |

TONE MAP MODEL      ↓ TONE MAP MODEL ID

| MODEL SELECTING SECTION | ⌐143 | CANCEL FLAG

141      ↑ TONE MAP MODEL                ⌐146                IMAGE

| MODEL STORAGE SECTION | | CANCELLATION SECTION | ⌐146 |

⌐144

| TONE MAPPING SECTION |

↓ IMAGE

# FIG.20

IMAGE ↓                                                                120D

| IMAGE ACQUIRING SECTION | 122 |

IMAGE ↓

| IMAGE ANALYSIS SECTION | 123 |

ANALYSIS RESULT ↓                    132

| MAP GENERATING SECTION |

| PARAMETER SENDING SECTION | 127 |

TONE MAP MODEL PARAMETER                    133

| MODEL ID SELECTING SECTION |

TONE MAP MODEL ↓

| MODEL ID SENDING SECTION | 125 |

TONE MAP MODEL ID        ↑ TONE MAP MODEL ID

| MODEL ID STORAGE SECTION | 121 |

134

| REPETITION PERIOD SENDING SECTION |

REPETITION PERIOD ↓                    IMAGE    140D

142

| RECEIVING SECTION |

REPETITION PERIOD        ↓ TONE MAP MODEL ID

| MODEL SELECTING SECTION | 143 | TONE MAP MODEL PARAMETER    IMAGE

141        TONE MAP MODEL        ↓ TONE MAP MODEL    145

| MODEL STORAGE SECTION | | MODEL CONFIGURING SECTION |

↓ TONE MAP MODEL    144A

| TONE MAPPING SECTION |

↓ IMAGE

# FIG.21

IMAGE ↓                                    ⌐120E

| IMAGE ACQUIRING SECTION | ⌐122 |

IMAGE ↓

| IMAGE ANALYSIS SECTION | ⌐123 |

↓ ANALYSIS RESULT

| MAP SELECTING SECTION | ⌐135 |

↓ TONE MAPS

| MAP SENDING SECTION | ⌐136 |

TONE MAPS

| IMAGE ENCODING SECTION | ⌐137 |

↓ DECODED IMAGE

| IMAGE SENDING SECTION | ⌐130 |

DECODED IMAGE

⌐140E

| RECEIVING SECTION | ⌐142 |

↓ DECODED IMAGE

| IMAGE DECODING SECTION | ⌐147 |

IMAGE                                   TONE MAPS

| MAP SELECTING SECTION | ⌐148 |

↓ TONE MAP                              ⌐144B

| TONE MAPPING SECTION |

↓ IMAGE

# FIG.22

IMAGE

120F

IMAGE ACQUIRING SECTION — 122

IMAGE

MAP GENERATING SECTION — 135A

TONE MAPS

MAP SENDING SECTION — 136

TONE MAPS

MAP ID SENDING SECTION — 129

MAP ID

IMAGE ENCODING SECTION — 137

DECODED IMAGE

IMAGE SENDING SECTION — 130

DECODED IMAGE

MODEL SENDING SECTION — 139

TONE MAP MODELS

140F

RECEIVING SECTION — 142

DECODED IMAGE

IMAGE DECODING SECTION — 147

TONE MAPS

IMAGE

MAP SELECTING SECTION — 148

TONE MAP

TONE MAPPING SECTION — 144B

IMAGE

IMAGE DISPLAY SECTION — 149

# FIG.23

IMAGE

├─ 120G

```
┌─────────────────────────────────┐
│   IMAGE ACQUIRING SECTION       │ ├ 122
└─────────────────────────────────┘
          IMAGE
┌─────────────────────────────────┐
│    MAP GENERATING SECTION       │ ├ 135A
└─────────────────────────────────┘
          TONE MAPS
┌─────────────────────────────────┐
│      MAP SENDING SECTION        │ ├ 136
└─────────────────────────────────┘
TONE MAPS

┌─────────────────────────────────┐
│    IMAGE ENCODING SECTION       │ ├ 137
└─────────────────────────────────┘
          DECODED IMAGE
┌─────────────────────────────────┐
│     IMAGE SENDING SECTION       │ ├ 130
└─────────────────────────────────┘
DECODED IMAGE
```

├─ 140G

```
┌─────────────────────────────────┐
│      RECEIVING SECTION          │ ├ 142
└─────────────────────────────────┘
          DECODED IMAGE
┌─────────────────────────────────┐
│    IMAGE DECODING SECTION       │ ├ 147    TONE MAPS
└─────────────────────────────────┘
IMAGE
┌─────────────────────────────────┐
│     MAP SELECTING SECTION       │ ←
└─────────────────────────────────┘
          TONE MAP              └ 148A
┌─────────────────────────────────┐
│     TONE MAPPING SECTION        │ ├ 144B
└─────────────────────────────────┘
          IMAGE
┌─────────────────────────────────┐
│     IMAGE DISPLAY SECTION       │ ├ 149
└─────────────────────────────────┘
```

# FIG.24

```
                                                              ┌120H
┌─────────────────────────────────────────────────────────────────┐
│                                                        ┌135A       │
│              ┌─────────────────────────────────┐       │          │
│              │     MAP GENERATING SECTION       │──────────┐       │
│              └─────────────────────────────────┘       │  │       │
│                          │                              │  │       │
│                          │ TONE MAPS                    │  │       │
│                          ▼                              │  │       │
│              ┌─────────────────────────────────┐  ┌128A │  │       │
│              │    MAP ID GENERATING SECTION     │  │     │  │       │
│              └─────────────────────────────────┘       │  │       │
│                          │                              │  │  ┌136  │
│                          │ TONE MAP        ┌──────────────┴──┐     │
│                          │ IDS             │  MAP SENDING SECTION  │
│                          ▼                 └──────────────────┘     │
│              ┌─────────────────────────────────┐  ┌129       │     │
│              │     MAP ID SENDING SECTION       │            │     │
│              └─────────────────────────────────┘            │     │
│                          │                         TONE MAPS │     │
└──────────────────────────┼─────────────────────────────────┼─────┘
```

TONE MAPS

TONE MAP IDS

IMAGE

┌140H

RECEIVING SECTION ┌142

IMAGE   TONE MAP IDS   TONE MAPS

MAP SELECTING SECTION

148B

TONE MAP

TONE MAPPING SECTION ┌144B

IMAGE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060077405 A
- US 20050243177 A
- US 20050047676 A
- US 20040218830 A
- US 7010174 B
- US 6879731 B
- EP 1507234 A
- WO 2004098167 A
- US 20050030315 A
- US 20050013501 A
- WO 2005104035 A
- EP 1578109 A
- US 2003184812 A1

**Non-patent literature cited in the description**

- Advanced Video Coding (AVC). Joint Video Team of ITU-T VCEG and ISO/IEC MPEG. January 2005